(19) **Europäisches Patentamt**
**European Patent Office**
**Office européen des brevets**

(11) **EP 4 694 453 A1**

(12) **EUROPEAN PATENT APPLICATION**
published in accordance with Art. 153(4) EPC

(43) Date of publication:
**11.02.2026 Bulletin 2026/07**

(21) Application number: **24784320.4**

(22) Date of filing: **03.04.2024**

(51) International Patent Classification (IPC):
***H04W 72/0446*** *(2023.01)*

(52) Cooperative Patent Classification (CPC):
**H04B 1/713; H04W 4/029; H04W 72/0446; H04W 72/0453**

(86) International application number:
**PCT/CN2024/085717**

(87) International publication number:
**WO 2024/208238 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.04.2023 CN 202310368924**

(71) Applicant: **Spreadtrum Semiconductor (Nanjing) Co., Ltd.**
**Nanjing, Jiangsu 211899 (CN)**

(72) Inventor: **LEI, Zhenzhu**
**Nanjing, Jiangsu 211899 (CN)**

(74) Representative: **Casalonga**
**Casalonga & Partners**
**Bayerstraße 71/73**
**80335 München (DE)**

(54) **RESOURCE CONFIGURATION METHOD AND APPARATUS FOR POSITIONING REFERENCE SIGNAL, AND CHIP AND MODULE DEVICE**

(57) The present application discloses a method, an apparatus, a chip, and a module device for resource configuration for a positioning reference signal. The method comprises: receiving, from a network device, resource configuration information of a positioning reference signal, the resource configuration information configuring resources for frequency-hopping transmission of the positioning reference signal; and determining resources for the frequency-hopping transmission of the positioning reference signal based on the resource configuration information. Based on the method described in the present application, resource configuration for frequency-hopping transmission of the positioning reference signal may be implemented.

FIG. 4

## Description

The present application claims priority to CN Patent Application No. 202310368924.6, entitled as "METHOD, APPARATUS, CHIP, AND MODULE DEVICE FOR RESOURCE CONFIGURATION FOR A POSITIONING REFERENCE SIGNAL", filed with the China National Intellectual Property Administration on April 7, 2023, the entirety of which is incorporated herein by reference.

## TECHNICAL FIELD

The present invention relates to communications, particularly to a method, an apparatus, a chip, and a module device for resource configuration for a positioning reference signal.

## BACKGROUND

With the further evolution of the fifth generation mobile communication technology (5G), the channel bandwidth of terminal devices has been further reduced, especially for terminals in Internet of Things (IoT) scenarios, to decrease the cost of terminals. In many application scenarios, while the channel bandwidth of terminal devices is limited, there is also a demand for high-accuracy positioning for terminal devices. However, accuracy of positioning is closely related to the channel bandwidth of the terminal device; the wider the channel bandwidth, the higher the accuracy of positioning; conversely, the narrower the channel bandwidth, the lower the accuracy of positioning. Therefore, when the radio frequency bandwidth of the terminal device is not wide enough for the terminal device to transmit or receive a positioning reference signal on one radio frequency bandwidth simultaneously, the terminal device may transmit or receive the positioning reference signal with frequency-hopping, i.e., the terminal device may transmit or receive the positioning reference signal for a plurality of times on different resources in frequency domain using time-division multiplexing (TDM) (i.e., on different resources in time domain). By combining the positioning reference signals transmitted or received for a plurality of times on different resources in frequency domain, the accuracy of positioning is improved.

Therefore, when the radio frequency bandwidth of the terminal device is not wide enough for the terminal device to transmit or receive the positioning reference signal on one bandwidth simultaneously, it remains a problem to be solved as of the resource configuration for frequency-hopping transmissions of the positioning reference signal.

## SUMMARY OF THE INVENTION

The present application provides a method, an apparatus, a chip, and a module device for resource configuration for a positioning reference signal, which is able to implement resource configuration for frequency-hopping transmission of the positioning reference signal.

In a first aspect, the present application provides a method for resource configuration for a positioning reference signal. The method includes: receiving, from a network device, resource configuration information of a positioning reference signal, the resource configuration information configuring resources for frequency-hopping transmission of the positioning reference signal; and determining resources for the frequency-hopping transmission of the positioning reference signal based on the resource configuration information.

When the radio frequency bandwidth of the terminal device is not wide enough for the terminal device to transmit or receive the positioning reference signal on one bandwidth simultaneously, the terminal device has to transmit the positioning reference signal with frequency-hopping on different resources for the positioning reference signal. In such cases, the method described in the first aspect is able to implement the resource configuration for the frequency-hopping transmission of the positioning reference signal, and it may ensure that there is time between two adjacent frequency hops for the terminal device to adjust or switch radio frequency, thereby meeting the needs for positioning while ensuring data transmission.

In an implementation, the resource configuration information comprises a transmission period of the positioning reference signal, one transmission period of the positioning reference signal comprising a plurality of transmission occasions for the positioning reference signal. Determining the resources for the frequency-hopping transmission of the positioning reference signal based on the resource configuration information comprises: determining resources in frequency domain for the positioning reference signal corresponding to a first transmission occasion based on a number of transmissions corresponding to the first transmission occasion, the first transmission occasion being any one of the plurality of transmission occasions. In this way, the needs of frequency-hopping transmission may be satisfied and data transmission may be guaranteed.

In an implementation, the plurality of transmission occasions correspond to one resource for the positioning reference signal; or the plurality of transmission occasions correspond to a plurality of resources for the positioning reference signal.

In an implementation, the transmission period of the positioning reference signal further comprises a time interval between two adjacent transmission occasions of the plurality of transmission occasions. In this way, by creating the time interval between two adjacent transmission occasions of the plurality of transmission occasions, it may be ensured that there is time between two adjacent frequency hops for the terminal device to adjust or switch radio frequency, thereby meeting the needs for positioning.

In an implementation, the number of transmissions corresponding to the first transmission occasion is determined based on: a number of transmission occasions contained in the transmission period of the positioning reference signal, an index value of the first transmission occasion, a numbering of the frame in which the first transmission occasion is located, a number of slots contained in each frame, a numbering of the slot in which the first transmission occasion is located, an offset value of a position of a starting slot of the positioning reference signal, and the transmission period of the positioning reference signal.

In an implementation, the resource configuration information comprises a number of transmissions, N, of the positioning reference signal, and N is an integer greater than 1,Determining the resources for the frequency-hopping transmission of the positioning reference signal based on the resource configuration information comprises: determining a resource for the positioning reference signal corresponding to a $n^{th}$ transmission of the positioning reference signal based on an index value of the $n^{th}$ transmission of the positioning reference signal, wherein n is any integer from [1, N].

In an implementation, the resource configuration information is carried in Downlink Control Information (DCI).

In an implementation, the resource configuration information comprises a first indication field for resources for the positioning reference signal, wherein a value of the first indication field being a first value indicates that intra-resource frequency-hopping transmission of the positioning reference signal is to be performed on the resources for the positioning reference signal.

In an implementation, the resource configuration information further comprises a value of a first offset between two adjacent frequency hops within the resources for the positioning reference signal. Determining the resources for the frequency-hopping transmission of the positioning reference signal based on the resource configuration information comprises: determining resources in time domain for the positioning reference signal corresponding to a plurality of frequency hops, within the resources for the the positioning reference signal, based on the value of the first offset. In this way, by creating an offset between two adjacent frequency hops, it may be ensured that there is time between two adjacent frequency hops for the terminal device to adjust or switch radio frequency, thereby meeting the needs for positioning.

In an implementation, determining the resources in time domain for the positioning reference signal corresponding to the plurality of frequency hops, within the resources for the positioning reference signal, based on the value of the first offset comprises:

determining a resource in time domain for the positioning reference signal corresponding to a first frequency hop, within the resources for the positioning reference signal, based on a position of a starting symbol of the resources for the positioning reference signal; and determining resources in time domain for the positioning reference signal corresponding to frequency hops other than the first frequency hop of the plurality of frequency hops, within the resources for the positioning reference signal based on the resource in time domain for the positioning reference signal corresponding to the first frequency hop and the value of the first offset.

In an implementation, the resource configuration information comprises a second indication field for a resource set for the positioning reference signal, wherein a value of the second indication field being a first value indicates that intra-resource set frequency-hopping transmission of the positioning reference signal is to be performed on the resource set for the positioning reference signal.

In an implementation, the resource configuration information further comprises a value of a second offset between two adjacent frequency hops within each resource in the resource set for the positioning reference signal. Determining the resources for the frequency-hopping transmission of the positioning reference signal based on the resource configuration information comprises: determining resources in time domain for the positioning reference signal corresponding to a plurality of frequency hops, within each resource in the resource set for the positioning reference signal, based on the value of the second offset. In this way, by creating an offset between two adjacent frequency hops, it may be ensured that there is time between two adjacent frequency hops for the terminal device to adjust or switch radio frequency, thereby meeting the needs for positioning.

In an implementation, determining resources in time domain for the positioning reference signal corresponding to a plurality of frequency hops, within each resource in the resource set for the positioning reference signal, based on the value of the second offset comprises: determining a resource in time domain for the positioning reference signal corresponding to a first frequency hop, within each resource in the resource set for the positioning reference signal, based on a position of a starting symbol of each resource for the positioning reference signal; and determining resources in time domain for the positioning reference signal corresponding to frequency hops other than the first frequency hop of the plurality of frequency hops, within each resource for the positioning reference signal, based on the resource in time domain for the positioning reference signal corresponding to the first frequency hop within each resource for the positioning reference signal and the value of the second offset.

In an implementation, the resource configuration information is carried in Radio Resource Control (RRC) signaling or DCI.

In an implementation, the resource configuration information indicates that inter-resource frequency-hopping transmission of the positioning reference signal is to be performed across a plurality of resources for the positioning reference signal. The resource configuration information comprises a value of a third offset between two adjacent frequency hops across the plurality of resources for the positioning reference signal. Determining the resources for the frequency-hopping transmission of the positioning reference signal based on the resource configuration information comprises: determining resources for the positioning reference signal corresponding to the plurality of frequency hops based on the value of the third offset and a resource for the positioning reference signal corresponding to a first frequency hop. In this way, by creating an offset between two adjacent frequency hops, it may be ensured that there is time between two adjacent frequency hops for the terminal device to adjust or switch radio frequency, thereby meeting the needs for positioning.

In an implementation, the resource for the positioning reference signal corresponding to the first frequency hop is a first resource in time domain for the positioning reference signal of the plurality of resources for the positioning reference signal.

In an implementation, the values of the third offsets between either two adjacent frequency hops across the plurality of resources for the positioning reference signal are the same or are different.

In an implementation, the resource configuration information indicates that inter-resource frequency-hopping transmission of the positioning reference signal is to be performed across a plurality of resources for the positioning reference signal. The resource configuration information comprises a reference resource for the positioning reference signal and values of fourth offsets between the reference resource for the positioning reference signal and resources other than the reference resource for the positioning reference signal of the plurality of resources for the positioning reference signal. Determining the resources for the frequency-hopping transmission of the positioning reference signal based on the resource configuration information comprises: determining resources for the positioning reference signal corresponding to a plurality of frequency hops based on the values of the fourth offsets and the reference resource for the positioning reference signal. In this way, by creating an offset between two adjacent frequency hops, it may be ensured that there is time between two adjacent frequency hops for the terminal device to adjust or switch radio frequency, thereby meeting the needs for positioning.

In an implementation, the plurality of resources for the positioning reference signal are resources for the positioning reference signal determined from one or more resource sets for the positioning reference signal of the positioning reference signal.

In an implementation, the plurality of resources for the positioning reference signal are resources for the positioning reference signal with a same identifier determined from different resource sets for the positioning reference signal of the positioning reference signal.

In a second aspect, the present application provides a method for resource configuration for a positioning reference signal. The method includes: transmitting resource configuration information of a positioning reference signal to a terminal device, the resource configuration information configuring resources for frequency-hopping transmission of the positioning reference signal.

The positive effects of implementations of the second aspect may be referred to the positive effects of implementations of the first aspect, which are not repeated herein.

In an implementation, the resource configuration information comprises a transmission period of the positioning reference signal, one transmission period of the positioning reference signal comprising a plurality of transmission occasions for the positioning reference signal.

In an implementation, the plurality of transmission occasions correspond to one resource for the positioning reference signal; or the plurality of transmission occasions correspond to a plurality of resources for the positioning reference signal.

In an implementation, the transmission period of the positioning reference signal further comprises a time interval between two adjacent transmission occasions of the plurality of transmission occasions.

In an implementation, the resource configuration information comprises a number of transmissions, N, of the positioning reference signal, and N is an integer greater than 1.

In an implementation, the resource configuration information is carried in Downlink Control Information (DCI).

In an implementation, the resource configuration information comprises a first indication field for resources for the positioning reference signal, wherein a value of the first indication field being a first value indicates that intra-resource frequency-hopping transmission of the positioning reference signal is to be performed on the resources for the positioning reference signal.

In an implementation, the resource configuration information further comprises a value of a first offset between two adjacent frequency hops within the resources for the positioning reference signal.

In an implementation, the resource configuration information comprises a second indication field for a resource set for the positioning reference signal, wherein a value of the second indication field being a first value indicates that intra-resource set frequency-hopping transmission of the positioning reference signal is to be performed on the resource set for the positioning reference signal.

In an implementation, the resource configuration information further comprises a value of a second offset between two adjacent frequency hops within each resource in the resource set for the positioning reference signal.

In an implementation, the resource configuration information is carried in Radio Resource Control (RRC) signaling or DCI.

In an implementation, the resource configuration information indicates that inter-resource frequency-hopping transmission of the positioning reference signal is to be performed across a plurality of resources for the positioning reference signal. The resource configuration information comprises a value of a third offset between two adjacent frequency hops across the plurality of resources for the positioning reference signal.

In an implementation, a resource for the positioning reference signal corresponding to a first frequency hop across the plurality of resources for the positioning reference signal is a first resource in time domain for the positioning reference signal of the plurality of resources for the positioning reference signal.

In an implementation, the values of the third offsets between either two adjacent frequency hops across the plurality of resources for the positioning reference signal are the same or are different.

In an implementation, the resource configuration information indicates that inter-resource frequency-hopping transmission of the positioning reference signal is to be performed across a plurality of resources for the positioning reference signal. The resource configuration information comprises a reference resource for the positioning reference signal and values of fourth offsets between the reference resource for the positioning reference signal and resources other than the reference resource for the positioning reference signal of the plurality of resources for the positioning reference signal.

In an implementation, the plurality of resources for the positioning reference signal are resources for the positioning reference signal determined from one or more resource sets for the positioning reference signal of the positioning reference signal.

In an implementation, the plurality of resources for the positioning reference signal are resources for the positioning reference signal with a same identifier determined from different resource sets for the positioning reference signal of the positioning reference signal.

In a third aspect, the present application provides an apparatus for resource configuration for a positioning reference signal. The apparatus includes: a communication unit for receiving, from a network device, resource configuration information of a positioning reference signal, the resource configuration information configuring resources for frequency-hopping transmission of the positioning reference signal; and a processing unit for determining resources for the frequency-hopping transmission of the positioning reference signal based on the resource configuration information.

In a fourth aspect, the present application provides an apparatus for resource configuration for a positioning reference signal. The apparatus includes: a communication unit for transmitting resource configuration information of a positioning reference signal to a terminal device, the resource configuration information configuring resources for frequency-hopping transmission of the positioning reference signal.

In a fifth aspect, the present application provides a chip. The chip includes a processor and a communication interface. The processor is configured to cause the chip to perform the method according to the first aspect or the second aspect or any possible implementation thereof mentioned above.

In a sixth aspect, the present application provides a module device. The module device includes a communication module, a power module, a storage module, and a chip, wherein: the power module is configured to provide power for the module device; the storage module is configured to store data and instructions; the communication module is configured for internal communication within the module device, or for communication between the module device and external devices; and the chip is configured to perform the method according to the first aspect or the second aspect or any possible implementation thereof mentioned above.

In a seventh aspect, an embodiment of the present invention discloses an apparatus for resource configuration for a positioning reference signal. The apparatus includes a memory and a processor. The memory is configured to store computer programs including program instructions, and the processor is configured to invoke the program instructions to perform the method according to the first aspect or the second aspect or any possible implementation thereof mentioned above.

In an eighth aspect, the present application provides a computer-readable storage medium. The computer-readable storage medium stores computer-readable instructions. The computer-readable instructions, when being executed on an apparatus for resource configuration for a positioning reference signal, cause the apparatus to perform the method according to the first aspect or the second aspect or any possible implementation thereof mentioned above.

In a ninth aspect, the present application provides a computer program or computer program product, including code or instructions. The code or instructions, when being executed on a computer, cause the computer to perform the method according to the first aspect or the second aspect or any possible implementation thereof mentioned above.

## BRIEF DESCRIPTION OF THE DRAWINGS

FIG. 1 is a schematic diagram of a communication system provided by an embodiment of the present application;

FIG. 2A is a schematic diagram of a resource in time domain for an SRS provided by an embodiment of the present application;

FIG. 2B is another schematic diagram of resources in time domain for an SRS provided by an embodiment of the present application;

FIG. 3 is a schematic diagram of locations of resources for frequency-hopping transmission of an SRS provided by an embodiment of the present application;

FIG. 4 is a schematic flowchart of a method for resource configuration for a positioning reference signal provided by an embodiment of the present application;

FIG. 5 is a schematic diagram of a transmission period of a positioning reference signal and a plurality of transmission occasions for the positioning reference signal provided by an embodiment of the present application;

FIG. 6A is a schematic diagram of intra-resource frequency-hopping transmission of a positioning reference signal on resources for the positioning reference signal provided by an embodiment of the present application;

FIG. 6B is schematic diagram of another intra-resource frequency-hopping transmission of a positioning reference signal on resources for the positioning reference signal provided by an embodiment of the present application;

FIG. 7A is a schematic diagram of inter-resource frequency-hopping transmission of a positioning reference signal across a plurality of resources for the positioning reference signal provided by an embodiment of the present application;

FIG. 7B is schematic diagram of another inter-resource frequency-hopping transmission of a positioning reference signal across a plurality of resources for the positioning reference signal provided by an embodiment of the present application;

FIG. 8 is a schematic structure diagram of an apparatus for resource configuration for a positioning reference signal provided by an embodiment of the present application;

FIG. 9 is schematic structure diagram of another apparatus for resource configuration for a positioning reference signal provided by an embodiment of the present application; and

FIG. 10 is a schematic structure diagram of a module device provided by an embodiment of the present application.

## DETAILED DESCRIPTION OF EMBODIMENTS

The technical solutions in the embodiments of the present application will be described clearly and completely below in connection with the drawings in the embodiments of the present application. Apparently, the described embodiments are merely some but not all of the embodiments of the present invention. All other embodiments obtained by a person of ordinary skill in the art based on the embodiments of the present invention without creative efforts shall fall within the protection scope of the present invention.

The terms used in the following embodiments of the present application are for the purpose of describing specific embodiments only and are not intended to pose limitation on the present application. As used in the specification and appended claims of the present application, the singular forms "a", "an", "the", "said", "that", and "this" are intended to include the plural forms as well, unless it is clearly indicated otherwise in the context. It should also be understood that the term "and/or" as used in the present application refers to and includes any and all possible combinations of one or more of the listed items.

It should be noted that the terms "first", "second", "third", etc. in the specification and claims of the present application and the above drawings are used to distinguish similar objects and do not necessarily describe a specific sequence or order. It should be understood that the data used as such herein may be interchanged under appropriate circumstances so that the embodiments of the present application described herein may be implemented in sequences other than those illustrated or described herein. Furthermore, the terms "comprise/include" and any variations thereof are intended to cover non-exclusive inclusion. For example, processes, methods, systems, products, or servers that comprise/include a series of steps or units are not necessarily limited to those clearly listed steps or units, but may include other steps or units not clearly listed or inherent to these processes, methods, products, or devices.

For better understanding of the embodiments of the present application, the system architecture involved in the embodiments of the present application is first introduced below.

The technical solutions of the embodiments of the present application may be applied to various communication systems, for example, a Global System for Mobile Communications (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD), a Universal Mobile Telecommunications System (UMTS), a Worldwide Interoperability for Microwave Access (WiMAX) communication system, a fifth generation (5G) system or a New Radio (NR) and future communication system, etc.

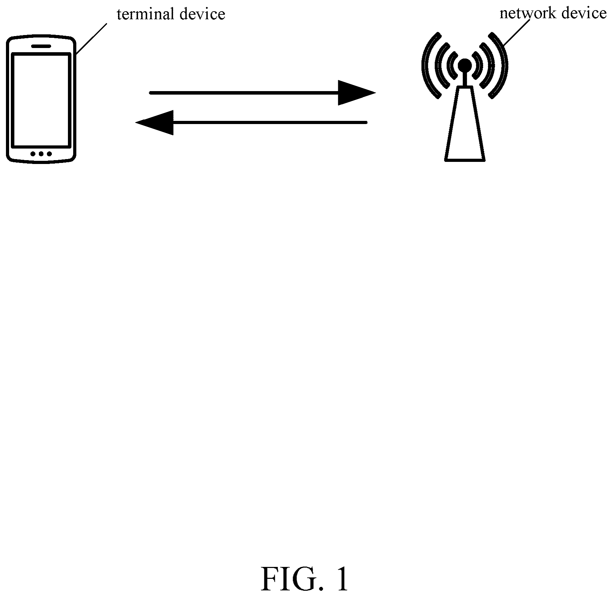

FIG. 1 is a schematic diagram of a communication system provided by an embodiment of the present application. The solutions in the present application may be applied to the communication system. The communication system may include a network device and at least one terminal device. The communication system is illustrated in FIG.1 as an example, which includes a network device and a terminal device.

**1. Terminal device**

A terminal device includes a device that provides voice and/or data connectivity to a user. For example, a terminal device is a device with wireless transceiver functionality. The terminal device may be deployed on land, including indoor or outdoor, handheld, wearable, or vehicle-mounted device. The terminal device may also be deployed on water (such as a ship, etc.). Or the terminal device may also be deployed in air (e.g., on an airplane, balloon, and satellite, etc.). The terminal device in the embodiments of the present application may be a device equipped with dual microphones, such as a mobile phone, earphones, a pad, a computer with wireless transceiver functionality, a Virtual Reality (VR) terminal device, an Augmented Reality (AR) terminal device, a wireless terminal in industrial control, a vehicle-mounted terminal device, a wireless terminal in self-driving, a wireless terminal in remote medical, a wireless terminal in a smart grid, a wireless terminal in transportation safety, a wireless terminal in a smart city, a wireless terminal in a smart home, a wearable terminal device, etc. The embodiments of the present application do not pose limitation on the application scenarios. Sometimes, a terminal may be referred to as a terminal device, a User Equipment (UE), an access terminal device, a vehicle-mounted terminal, an industrial control terminal, a UE unit, a UE station, a mobile station, a mobile platform, a remote station, a remote terminal device, a mobile device, a UE terminal device, a terminal device, a wireless communication device, a UE agent, or a UE apparatus, etc. The terminal may be stationary or mobile. In the embodiments of the present application, the apparatus for implementing the functions of the terminal device may be the terminal device itself, or may be an apparatus that may support the terminal device to implement the functions, such as a chip system or a combination of devices and components that may implement the functions of the terminal device. The apparatus may be installed in the terminal device.

**2. Network device**

A network device may be a base station, an evolved NodeB (eNodeB), a Transmission Reception Point (TRP), a next generation NodeB (gNB) in a fifth generation (5G) mobile communication system, a next generation base station in a sixth generation (6G) mobile communication system, a base station in a future mobile communication system, or an access node in a WiFi system, etc. The network device may also be a module or unit that implements some of the functions of a base station. For example, it may be a Centralized Unit (CU), or it may be a Distributed Unit (DU).Here, the CU implements the functions of the Radio Resource Control (RRC) protocol and the Packet Data Convergence Protocol (PDCP) of the base station, and may also implement the functions of the Service Data Adaptation Protocol (SDAP). the DU implements the functions of the Radio Link Control (RLC) layer and the Medium Access Control (MAC) layer of the base station, and may also implement some or all of the functions of the physical layer. Detailed descriptions of the above protocol layers may be recited with reference to the related technical specifications of the 3rd Generation Partnership Project (3GPP). The network device may be a macro base station, a micro base station, or an indoor base station, or it may be a relay node or a donor node, etc. In the embodiments of the present application, the apparatus for implementing the functions of the network device may be the network device itself, or may be an apparatus that may support the network device to implement the functions, such as a chip system or a combination of devices and components that may implement the functions of the access network device. The apparatus may be installed in the network device. The embodiments of the present application do not pose limitation on the specific technology adopted by the network device and the specific form of apparatus adopted by the network device.

To facilitate understanding of the solutions provided by the embodiments of the present application, introductions of a Sounding Reference Signal (SRS) is provided below.

A Reference Signal (RS) may be called a "pilot" signal, which is a known signal provided by the transmitter to the receiver for channel estimation or channel sounding. In an example where an SRS is used as the reference signal, the SRS may be used for uplink channel quality estimation and channel selection, and may also be used to calculate the Signal to Interference plus Noise Ratio (SINR) of the uplink channel, and may also be used to obtain uplink channel coefficients. In Time Division Duplex (TDD) scenarios, the uplink channel is reciprocal to the downlink channel, and the SRS may also be used to obtain downlink channel coefficients. Specifically, depending on functions of an SRS, the SRS may be used for beam management, codebook-based transmission, non-codebook-based transmission, and antenna switching transmission. In the embodiments of the present application, the positioning reference signal may be an SRS.

In current protocols, the network device may configure SRS resources for the terminal device through higher layer signaling (such as Radio Resource Control (RRC) signaling), so that the terminal device may transmit or receive the SRS on SRS resources. The network device may configure one or more SRS resources or one or more SRS resource sets for the terminal device. The purpose of configuring a plurality of SRS resource sets may be for precoding of multiple antennas for uplink and downlink, or for beam management for uplink and downlink. One SRS resource set may contain one or more SRS resources, and each SRS resource configuration includes configurations of the SRS resource, such as the usage, the periodicity, etc. Here, the SRS resource refers to resources in time domain and resources in frequency domain for an SRS. The introductions on configuration of resources in time domain and resources in frequency domain for an SRS are provided below:

(1). Configuration of resources in time domain for an SRS

The configuration of resources in time domain for an SRS may be determined by two parameters: $N_{symb}^{SRS}$ and $l_{offset}$, respectively, where $N_{symb}^{SRS} \in 1, 2, 4$, representing a number of OFDM symbols, $l_{offset} \in 0, 1, ..., 5$, i.e. resources in time domain for the SRS may occupy a number of 1, 2, or 4 consecutive OFDM symbols of the last 6 OFDM symbols of a time slot. A starting symbol of the resources in time domain for the SRS is $l_0 = N_{symb}^{slot} - 1 - l_{offset}$, $l_{offset} \geq N_{symb}^{SRS} - 1$, i.e. the starting symbol of the resources in time domain for the SRS is counted down from the last symbol of the time slot by a number of $l_{offset}$ symbols (the SRS cannot exceed the boundary of the time slot).

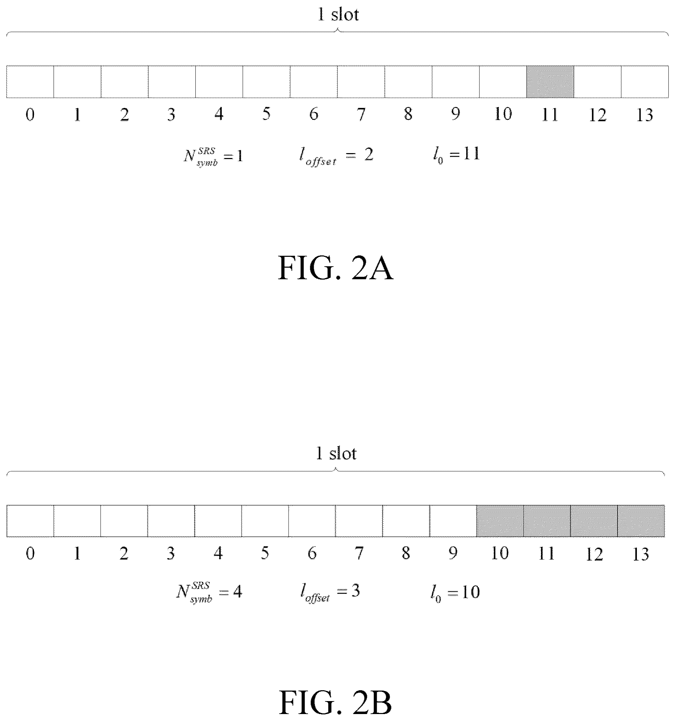

As shown in FIG. 2A, FIG. 2A is a schematic diagram of resources in time domain for an SRS provided by an embodiment of the present application. One slot has 14 OFDM symbols, $N_{symb}^{SRS} = 1$, $l_{offset} = 2$, and $l_0$=11. As can be seen, the resources in time domain for the SRS occupies a third from the last symbol of a slot.

As further shown in FIG. 2B, FIG. 2B is another schematic diagram of resources in time domain for an SRS provided by an embodiment of the present application. One slot has 14 OFDM symbols, $\overline{N}_{symb}^{SRS} = 4$, $l_{offset}$=3, , and $l_0$=10. As can be seen, the resources in time domain for the SRS occupy 4 consecutive OFDM symbols of a slot starting from the fourth from the last symbol.

(2). Configuration of resources in frequency domain for an SRS

The configuration of resources in frequency domain for an SRS may occupy a number of 4 to 272 Resource Blocks (RBs) and may support a comb structure in frequency domain, namely comb-2 and comb-4. The starting position of resources in frequency domain for the SRS is calculated using equations as follows:

$$k_0^{(p_i)} = \overline{k}_0^{(p_i)} + \sum_{b=0}^{B_{SRS}} K_{TC} M_{sc,b}^{SRS} n_b \quad (1)$$

$$\overline{k}_0^{(p_i)} = n_{shift} N_{sc}^{RB} + k_{TC}^{(p_i)} \quad (2)$$

$$k_{TC}^{(p_i)} = \begin{cases} (\overline{k}_{TC} + \frac{K_{TC}}{2}) \bmod K_{TC} & if \ n_{SRS}^{cs} \in \left\{ \frac{n_{SRS}^{cs,\max}}{2}, ..., n_{SRS}^{cs,\max} - 1 \right\} \ and \ N_{sp}^{SRS} = 4 \ and \ p_i \in \{1001, 1003\} \\ \overline{k}_{TC} & otherwise \end{cases}$$

(3)

where for equation (1), $k_0^{(p_i)}$ represents the starting position of resources in frequency domain for the SRS, $\overline{k}_0^{(p_i)}$ represents a position of a first subcarrier available for transmission of the SRS on the frequency band, and

$\sum_{b=0}^{B_{SRS}} K_{TC} M_{sc,b}^{SRS} n_b$ represents the bandwidth distribution in frequency domain after the bandwidth available for transmission of the SRS is divided into several equal parts.

The equation for calculating $\overline{k}_0^{(p_i)}$ (i.e. equation (2)) may be interpreted as consisting of two parts. A first part $\overline{n}_{shift} N_{sc}^{RB}$, represents a numbering of a starting common resource block (CRB) of resources in frequency domain available for transmission of the SRS, where, $n_{shift}$ is configured by freqDomainShift, and $N_{sc}^{RB}$ represents the number of subcarriers within an RB. When the starting position of the bandwidth part (BWP) is less than or equals to $n_{shift}$, the reference point is the center frequency point, otherwise, the reference point is the lower boundary of the BWP. A second part $k_{TC}^{(p_i)}$ represents the transmission comb offset, which has a value of 0 or 1 when the comb structure is comb2, and has a value of 0, 1, 2, or 3 when the comb structure is comb4. $\sum_{b=0}^{B_{SRS}} K_{TC} M_{sc,b}^{SRS} n_b$ implements the function for calculating a starting position of resources in frequency domain for an SRS in case of frequency-hopping and in case of no frequency-hopping.

Where $K_{TC}$ is a configuration for transmission comb, configured by transmissionComb; $M_{sc.b}^{RS} = \dfrac{m_{SRS,b} N_{sc}^{RB}}{K_{TC}}$ ,the parameter $m_{SRS,b}$ is a number of RBs distributed in frequency domain used by the SRS, which can be configured according to $C_{SRS}$ and $B_{SRS}$, particularly configured according to existing protocols. That is, the bandwidth occupied by the SRS in frequency domain is determined by Table 6.4.1.4.3-1 of TS 38.211.

a. When the SRS is transmitted with no frequency-hopping, $n_b$ is calculated by equation (4):

$$n_b = \left\lfloor \frac{4 n_{RRC}}{m_{SRS,b}} \right\rfloor \bmod N_b \tag{4}$$

Where $n_{RRC}$ is configured by freqDomainPosition, $N_b$ can be $N_0$, $N_1$, $N_2$, and $N_3$, $\lfloor \cdot \rfloor$ represents rounding down.
b. When the SRS is transmitted with frequency-hopping, $n_b$ is calculated by equation (5):

$$n_b = \begin{cases} \left\lfloor \dfrac{4 n_{RRC}}{m_{SRS,b}} \right\rfloor \bmod N_b & b \le b_{hop} \\ \left\{ F_b(n_{SRS}) + \left\lfloor \dfrac{4 n_{RRC}}{m_{SRS,b}} \right\rfloor \right\} \bmod N_b & otherwise \end{cases} \tag{5}$$

Where, $F_b(n_{SRS}) = \begin{cases} \left(\dfrac{N_b}{2}\right) \left\lfloor \dfrac{n_{SRS} \bmod \prod_{b'=b_{hop}}^{b} N_{b'}}{\prod_{b'=b_{hop}}^{b-1} N_{b'}} \right\rfloor + \left\lfloor \dfrac{n_{SRS} \bmod \prod_{b'=b_{hop}}^{b} N_{b'}}{2 \prod_{b'=b_{hop}}^{b-1} N_{b'}} \right\rfloor & if \ N_b \ even \\ \left\lfloor \dfrac{N_b}{2} \right\rfloor \left\lfloor \dfrac{n_{SRS}}{\prod_{b'=b_{hop}}^{b-1} N_{b'}} \right\rfloor & if \ N_b \ odd \end{cases}$ $n_{SRS}$ represents a number of transmissions of the SRS. Periodic transmissions of SRS, semi-persistent transmissions of SRS, and aperiodic transmissions of SRS may be supported depending on different periods of transmissions of SRS. For aperiodic transmissions of SRS, a SRS resource set and a slot offset corresponding to each state of trigger of the SRS resource may be configured by higher layer signaling. The slot offset indicates an interval in slots between reception of an SRS trigger and actual transmission of the SRS by the terminal device.

For aperiodic transmissions of SRS, equation (6) may be used to calculate the number of transmissions of SRS:

$$n_{SRS} = \left\lfloor \frac{l'}{R} \right\rfloor \tag{6}$$

For periodic transmissions or semi-persistent transmissions of SRS, equation (7) may be used to calculate the number of transmissions of SRS:

$$n_{SRS} = \left( \frac{N_{slot}^{frame,\mu} n_f + n_{s,f}^{\mu} - T_{offset}}{T_{SRS}} \right) \cdot \left( \frac{N_{symb}^{SRS}}{R} \right) + \left\lfloor \frac{l'}{R} \right\rfloor \tag{7}$$

SRS being transmitted with frequency-hopping may be indicated by a higher-layer parameter freqhopping. The repetition factor (i.e., R) indicates an R times of repetition per symbol, and Ns represents the number of symbols occupied by the SRS in a slot. Therefore, transmissions with frequency-hopping may be classified as: When R = Ns, intra-slot frequency-hopping is not supported, and only periodic SRS and semi-persistent SRS may be supported. In this case, frequency-hopping for aperiodic SRS cannot be configured. When R < Ns, in case of aperiodic SRS, intra-slot frequency-hopping is supported, and frequency-hopping over the entire BWP within a slot is required; in case of periodic or semi-persistent SRS, frequency-hopping over the entire BWP within a slot is not required.

To facilitate understanding, a specific example is given below.

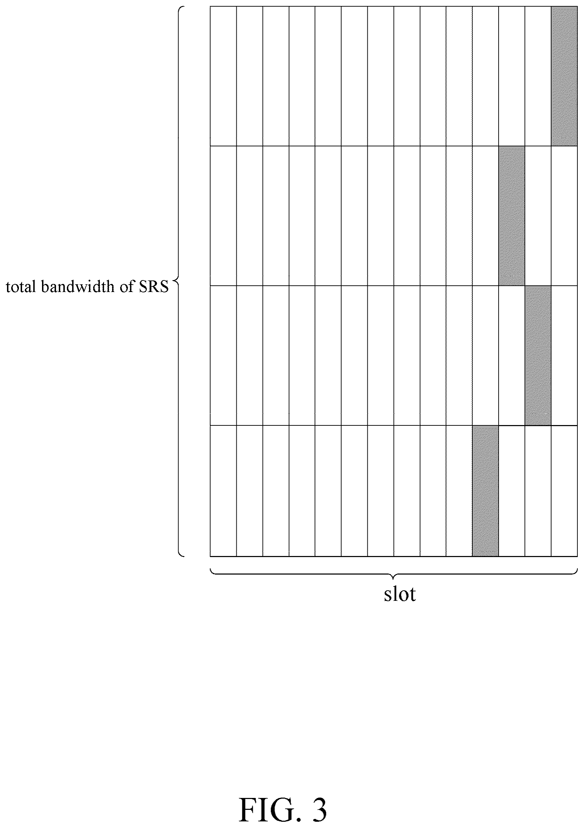

Assuming the parameters are configured as follows. For periodic transmissions of SRS, $C_{SRS}$ = 9, $B_{SRS}$ = 3 , a total bandwidth for SRS is 32 RBs, and each sub-bandwidth is 4 RBs; $b_{hop}$ = 0 ,meaning that frequency-hopping starts; the SRS occupies the last 4 symbols of a slot, i.e., Ns = 4; R = 1, meaning that frequency-hopping occurs on each symbol; freqDomainPosition is configured as $n_{RRC}$ = 0. When frequency-hopping starts, the value of $n_b$ is related to the number of transmissions of SRS. $n_b$ is calculated by equation (5), and the results are shown in Table 1. The specific positions of the resources for transmissions of SRS with frequency-hopping are shown in FIG. 3, i.e., frequency-hopping over the entire BWP may be completed in the last 4 symbols of a slot.

Table 1

| $n_0$ = 0 | $n_1$ =1 | $n_2$ = 1 |
| | | $n_2$ = 0 |
| | $n_1$ = 0 | $n_2$ = 1 |
| | | $n_2$ = 0 |

It should be noted that with the further evolution of 5G technology, the channel bandwidth of terminal devices has been further reduced to decrease the cost of terminals. In many application scenarios, while the channel bandwidth of terminal devices is limited, there is a demand for high-accuracy positioning for the terminal devices. Therefore, when the radio frequency bandwidth of the terminal device is not wide enough for the terminal device to transmit or receive a positioning reference signal on one radio frequency bandwidth simultaneously, the terminal device may transmit or receive the positioning reference signal with frequency-hopping, i.e., the terminal device may transmit or receive the positioning reference signal for a plurality of times on different resources in frequency domain in time-division multiplexing (TDM) (i.e., on different resources in time domain). By combining the positioning reference signal transmitted or received for a plurality of times on different resources in frequency domain, the accuracy of positioning is improved. However, currently there is no time interval between two adjacent SRS frequency hops, there is no time for the terminal device to adjust or switch radio frequency between two adjacent SRS frequency hops, which obviously cannot meet the needs for positioning.

Additionally, when the repetition factor R configured by the network device equals to the number of symbols occupied by the SRS in a slot, inter-resource frequency-hopping of the SRS may be implemented, i.e. an SRS transmission consumes a full resource for SRS. For periodic SRS, in this way, the duration of one frequency hop of SRS depends on the SRS period. If the SRS period is too short, resources for SRS are densely configured, so that the terminal device may not be able to communicate. If the SRS period is too long, data transmission would also be severely affected.

To enable resource configuration for transmission of a positioning reference signal with frequency-hopping to better satisfy the needs of positioning, the present application provides a method, an apparatus, a chip, and a module device for resource configuration for a positioning reference signal. Provided below is a detailed description of the method, apparatus, chip, and module device for resource configuration for a positioning reference signal provided by the embodiments of the present application.

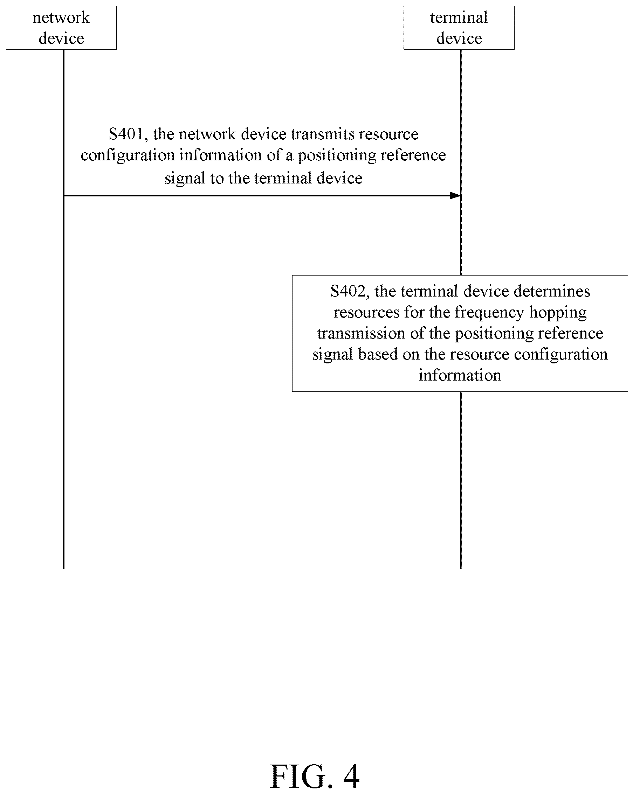

FIG. 4 is a schematic flowchart of a method for resource configuration for a positioning reference signal provided by an embodiment of the present application. As shown in FIG. 4, the method for resource configuration for a positioning reference signal includes the following steps S401 and S402. The method shown in FIG. 4 may be performed by a network device and a terminal device. Alternatively, the method shown in FIG. 4 may be performed by a chip in the network device and a chip in the terminal device, which is not limited herein. FIG. 4 is illustrated with the method being performed by a network device and a terminal device.

S401, a network device transmits resource configuration information of a positioning reference signal to a terminal device. Accordingly, the terminal device receives the resource configuration information of the positioning reference signal from the network device.

S402, the terminal device determines resources for frequency-hopping transmission of the positioning reference signal based on the resource configuration information.

In an embodiment of the present application, the resource configuration information is configured to configure resources for frequency-hopping transmission of the positioning reference signal. After receiving the resource configuration information of the positioning reference signal from the network device, the terminal device may determine resources for frequency-hopping transmission of the positioning reference signal via the resource configuration information, so as to transmit with frequency-hopping on the resources for frequency-hopping transmission.

The positioning reference signal may be an SRS or another reference signal, which is not limited herein. Embodiments of the present application are described in a context where the positioning reference signal is an SRS as an example. The positioning reference signal may be divided into different types, such as periodic positioning reference signal and aperiodic positioning reference signal. The frequency-hopping transmission of the positioning reference signal may performed on resources for the positioning reference signal or across the resources for the positioning reference signal. Detailed descriptions of the resource configuration information of different types of positioning reference signals for intra-resource frequency-hopping transmission of the positioning reference signal and for inter-resource frequency-hopping transmission of the positioning reference signal are shown as below.

(1) Intra-resource frequency-hopping transmission of positioning reference signal on resources for positioning reference signal

A. Periodic positioning reference signal

a. In an implementation, the resource configuration information includes parameters, such as a starting position offset, a period, etc. for transmission of the positioning reference signal. One transmission period of the positioning reference signal includes a plurality of transmission occasions for the positioning reference signal. The terminal device determining resources for frequency-hopping transmission of the positioning reference signal based on the resource configuration information may comprise: determining a resource in frequency domain for the positioning reference signal corresponding to a first transmission occasion based on a number of transmissions corresponding to the first transmission occasion, the first transmission occasion being any one of the plurality of transmission occasions.

When the terminal device desires to transmit or receive the positioning reference signal on different resources for positioning reference signal with frequency-hopping, for periodic resources for positioning reference signal, if the transmission period of the positioning reference signal is configured too short, the resources for positioning reference signal would be densely configured, and frequency-hopping transmissions would be performed all the time, interrupting data communications. If the transmission period of the positioning reference signal is configured too long, data transmission would also be severely affected. Therefore, by configuring the transmission period of a positioning reference signal and enhancing the transmission occasions for the positioning reference signal in the transmission period of the positioning reference signal by the network device, data transmissions may be performed at other time during the transmission period of the positioning reference signal, which may both meet the needs of frequency-hopping transmission and ensure data transmissions. Of course, the plurality of transmission occasions included in one transmission period of the positioning reference signal may also be regarded as a resource window, i.e., it may be understood as one resource for the positioning reference signal, and each transmission occasion may be understood as one frequency hop, implementing the intra-resource frequency-hopping transmission of positioning reference signal on resources for positioning reference signal.

Specifically, the terminal device determining a resource in frequency domain for the positioning reference signal corresponding to the first transmission occasion based on the number of transmissions corresponding to the first transmission occasion may be implemented using the method in prior art, such as the method for determining the configuration of resources in frequency domain for an SRS mentioned above, which will not be repeated herein.

Optionally, the plurality of transmission occasions correspond to one resource for the positioning reference signal; or the plurality of transmission occasions correspond to a plurality of resources for the positioning reference signal. That is to say, a plurality of transmission occasions in a transmission period of a positioning reference signal may be regarded as one resource for the positioning reference signal or as a plurality of resources for the positioning reference signal.

Optionally, the transmission period of the positioning reference signal further comprises a time interval between two adjacent transmission occasions of the plurality of transmission occasions. In this way, by creating a time interval between two adjacent transmission occasions of the plurality of transmission occasions, it may be ensured that there is time between two adjacent frequency hops for the terminal device to adjust or switch radio frequency, thereby meeting the needs for positioning.

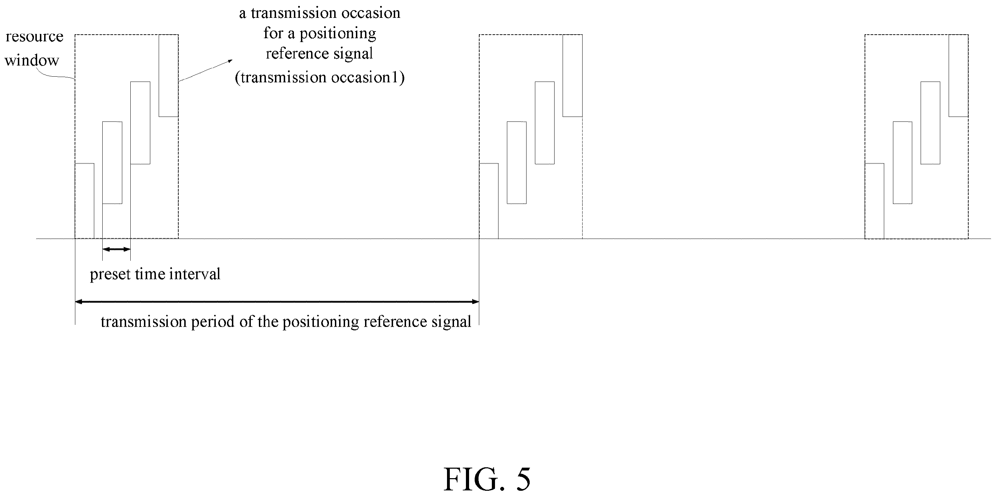

As shown in FIG. 5, one transmission period of the positioning reference signal includes 4 transmission occasions for the positioning reference signal, with a preset time interval between two adjacent transmission occasions. Of course, the 4 transmission occasions may also be regarded as a resource window, i.e., one resource for the positioning reference signal, and each transmission occasion may be regarded as one frequency hop within the one resource for the positioning reference signal. The terminal device may determine the resource in frequency domain for the positioning reference signal corresponding to any transmission occasion according to the number of transmissions corresponding to the transmission occasion. For example, the terminal device determines a resource 1 in frequency domain for the positioning reference signal corresponding to a transmission occasion 1 according to the number of transmissions corresponding to the transmission occasion 1.

Optionally, the number of transmissions corresponding to the first transmission occasion is determined based on: a number of transmission occasions contained in the transmission period of the positioning reference signal, an index value of the first transmission occasion, a numbering of the frame in which first transmission occasion is located, a number of slots contained in each frame, a numbering of the slot in which the first transmission occasion is located, an offset value of a position of a starting slot of the positioning reference signal, and the transmission period of the positioning reference signal.

Specifically, the number of transmissions corresponding to the first transmission occasion may be calculated by equation (8), as follows:

$$n_{SRS} = \left( \frac{N_{slot}^{frame,\mu} n_f + n_{s,f}^{\mu} - T_{offset}}{T} \right) \cdot (K) + m \tag{8}$$

Where K is a number of transmission occasions contained in one transmission period of the positioning reference signal, $m$ is an index value of the first transmission occasion; $N_{slot}^{frame,\mu}$ is a numbering of the frame in which the first transmission occasion is located, $n_f$ is a number of slots contained in each frame, $n_{s,f}^{\mu}$ is a numbering of the slot in which the first transmission occasion is located, $T_{offset}$ is an offset value of a position of a starting slot of the positioning reference signal, and $T$ is a transmission period of the positioning reference signal.

b. In an implementation, the resource configuration information comprises a first indication field for resources for a positioning reference signal, wherein a value of the first indication field being a first value indicates that intra-resource frequency-hopping transmission of the positioning reference signal is to be performed on the resources for the positioning reference signal.

The network device may configure an indication of activation/deactivation for frequency-hopping of the positioning reference signal via RRC signaling. The indication of activation/deactivation for frequency-hopping of the positioning reference signal may be configured per resource for the positioning reference signal. That is, the network device may configure a first indication field for resources for the positioning reference signal. When the value of the first indication field is a first value (i.e., indicating activation), it indicates that intra-resource frequency-hopping transmission of the positioning reference signal is to be performed on the resources for the positioning reference signal.

Optionally, the resource configuration information further comprises a value of a first offset between two adjacent frequency hops within the resources for the positioning reference signal. The terminal device determining the resources for the frequency-hopping transmission of the positioning reference signal based on the resource configuration information may comprise: determining resources in time domain for the positioning reference signal corresponding to a plurality of frequency hops, within the resources for the positioning reference signal, based on the value of the first offset. Here, offsets between either two adjacent frequency hops within the resources for the positioning reference signal have a same value. In this way, by creating an offset between two adjacent frequency hops, it may be ensured that there is time between two adjacent frequency hops for the terminal device to adjust or switch radio frequency, thereby meeting the needs for positioning.

Further and optionally, the terminal device determining the resources in time domain for the positioning reference signal corresponding to a plurality of frequency hops within the resources for the positioning reference signal based on the value of the first offset may comprise: determining a resource in time domain for the positioning reference signal corresponding to a first frequency hop, within the resources for the positioning reference signal, based on a position of a starting symbol of the resources for the positioning reference signal; and determining resources in time domain for the positioning reference signal corresponding to frequency hops other than the first frequency hop of the plurality of frequency hops, within the resources for the positioning reference signal based on the resource in time domain for the positioning reference signal corresponding to the first frequency hop and the value of the first offset.

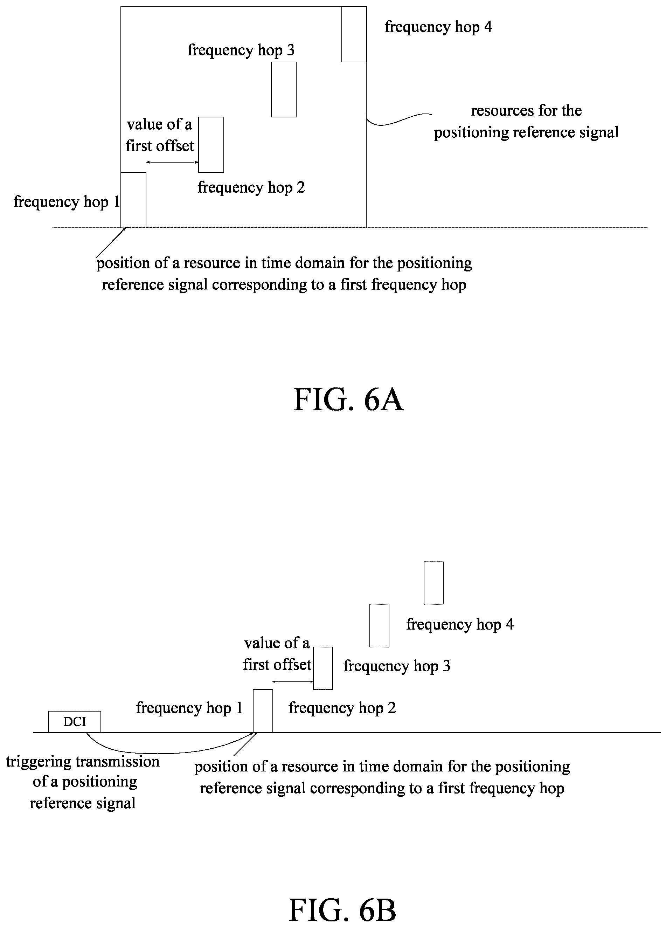

As shown in FIG. 6A, after the network device indicates that intra-resource frequency-hopping transmission of the positioning reference signal is to be performed on the resources for the positioning reference signal (i.e., the network device may configure an indication of activation for frequency-hopping of the positioning reference signal via RRC signaling), the terminal device may use a position of a starting symbol of the resources for the positioning reference signal as the position of the resource in time domain for the positioning reference signal corresponding to a first frequency hop (i.e., the position of a resource in time domain for the positioning reference signal corresponding to a frequency hop 1). The terminal device then determines the positions of resources in time domain for the positioning reference signal corresponding to other frequency hops in sequence according to the value of the first offset configured by the network device, i.e., the position of the resource in time domain for the positioning reference signal corresponding to a frequency hop 2, the position of the resource in time domain for the positioning reference signal corresponding to a frequency hop 3, and the position of the resource in time domain for the positioning reference signal corresponding to a frequency hop 4.

c. In an implementation, the resource configuration information comprises a second indication field for a resource set for the positioning reference signal, wherein a value of the second indication field being a first value indicates that intra-resource set frequency-hopping transmission of the positioning reference signal is to be performed on the resource set for the positioning reference signal.

The network device may configure an indication of activation/deactivation of frequency-hopping of the positioning reference signal via RRC signaling. The indication of activation/deactivation of frequency-hopping of the positioning reference signal may be configured per resource set for the positioning reference signal. That is, the network device may configure a second indication field for the resource set for the positioning reference signal. When the value of the second indication field is a first value (i.e., indicating activation), it indicates that intra-resource set frequency-hopping transmission of the positioning reference signal is to be performed within the resource set for the positioning reference signal, i.e., the frequency-hopping transmission of the positioning reference signal would be performed on each resource within the resource set for the positioning reference signal.

Optionally, the resource configuration information further comprises a value of a second offset between two adjacent frequency hops within each resource for the positioning reference signal in the resource set for the positioning reference signal. The terminal device determining the resources for the frequency-hopping transmission of the positioning reference signal based on the resource configuration information may comprise: determining resources in time domain for the positioning reference signal corresponding to a plurality of frequency hops, within each resource in the resource set for the positioning reference signal, based on the value of the second offset. Here, offsets between either two adjacent frequency hops within each resource in the resource set for the positioning reference signal have a same value. In this way, by creating an offset between two adjacent frequency hops, it may be ensured that there is time between two adjacent frequency hops for the terminal device to adjust or switch radio frequency, thereby meeting the needs for positioning.

Further and optionally, the terminal device determining the resources in time domain for the positioning reference signal corresponding to a plurality of frequency hops within each resource in the resource set for the positioning reference signal based on the value of the second offset may comprise: determining a resource in time domain for the positioning reference signal corresponding to a first frequency hop, within each resource for the positioning reference signal, based on a position of a starting symbol of each resource in the resource set for the positioning reference signal; and determining resources in time domain for the positioning reference signal corresponding to frequency hops other than the first frequency hop of the plurality of frequency hops, within each resource for the positioning reference signal, based on the resource in time domain for the positioning reference signal corresponding to the first frequency hop within each resource for the positioning reference signal and the value of the second offset.

Similarly, after the network device indicates that intra-resource set frequency-hopping transmission of the positioning reference signal is to be performed on the resource set for the positioning reference signal (i.e., the network device may configure the indication of activation of frequency-hopping of the positioning reference signal via RRC signaling), for each resource in the resource set for the positioning reference signal resource, the terminal device may use a position of a starting symbol of each resource for the positioning reference signal as the position of the resource in time domain for the positioning reference signal corresponding to the first frequency hop within the resource for the positioning reference signal. The terminal device then determines the positions of the resources in time domain for the positioning reference signal corresponding to other frequency hops within each resource for the positioning reference signal in sequence according to the value of the second offset configured by the network device.

Optionally, the resource configuration information is carried in RRC signaling.

B. Aperiodic positioning reference signal

a. In an implementation, the resource configuration information comprises a number of transmissions, N, of the positioning reference signal, wherein N is an integer greater than 1.The terminal device determining the resources for the frequency-hopping transmission of the positioning reference signal based on the resource configuration information may comprise: determining a resource for the positioning reference signal corresponding to an $n^{th}$ transmission of the positioning reference signal based on an index value of the $n^{th}$ transmission of the positioning reference signal, wherein n is any integer from [1, N].

Optionally, the resource configuration information is carried in Downlink Control Information (DCI).

The network device may trigger a plurality of transmissions of a resource for the positioning reference signal via DCI. The terminal device determines the resource for the positioning reference signal corresponding to each transmission according to an index number corresponding to each transmission. For example, if 4 times of transmissions of a positioning reference signal are triggered by DCI, the resource for the positioning reference signal corresponding to the first transmission of the positioning reference signal may be determined based on the index number 1 of the transmission and parameters configured by the network. The resource for the positioning reference signal corresponding to the second transmission may be determined based on the index number 2 of the transmission and the parameters configured by network. The resource for the positioning reference signal corresponding to the third transmission may be determined based on the index number 3 of the transmission and the parameters configured by network. The resource for the positioning reference signal corresponding to the fourth transmission may be determined based on the index number 4 of the transmission and the parameters configured by network.

b. In an implementation, the resource configuration information comprises a first indication field for resources for the positioning reference signal, wherein a value of the first indication field being a first value indicates that intra-resource frequency-hopping transmission of the positioning reference signal is to be performed on the resources for the positioning reference signal.

Optionally, the resource configuration information further comprises a value of a first offset between two adjacent frequency hops within the resources for the positioning reference signal. The terminal device determining the resources for the frequency-hopping transmission of the positioning reference signal based on the resource configuration information may comprise: determining resources in time domain for the positioning reference signal corresponding to a plurality of frequency hops, within the resource for the positioning reference signal, based on the value of the first offset.

Further and optionally, the terminal device determining the resources in time domain for the positioning reference signal corresponding to a plurality of frequency hops within the resources for the positioning reference signal based on the value of the first offset may comprise: determining a resource in time domain for the positioning reference signal corresponding to a first frequency hop, within the resources for the positioning reference signal, based on a position of a starting symbol of the resources for the positioning reference signal; and determining resources in time domain for the positioning reference signal corresponding to frequency hops other than the first frequency hop of the plurality of frequency hops, within the resources for the positioning reference signal based on the resource in time domain for the positioning reference signal corresponding to the first frequency hop and the value of the first offset.

Optionally, the resource configuration information is carried in DCI. For aperiodic positioning reference signals, DCI is required to indicate whether intra-resource frequency-hopping transmission of the positioning reference signal may be performed on the resources for the positioning reference signal, i.e., 1 bit should be configured in DCI to indicate whether intra-resource frequency-hopping transmission of the positioning reference signal may be performed on the resources for the positioning reference signal.

As shown in FIG. 6B, the resource configuration information is carried in DCI. The resource configuration information comprises a first indication field for resources for the positioning reference signal, wherein a value of the first indication field being a first value(i.e. indicating activation) indicates that intra-resource frequency-hopping transmission of the positioning reference signal is to be performed on the resources for the positioning reference signal.

It should be noted that when intra-resource frequency-hopping transmission of the positioning reference signal is performed on the resources for the positioning reference signal, method b for aperiodic positioning reference signals may be recited with reference to the descriptions of method b for periodic positioning reference signals mentioned above, which will not be repeated herein. The only difference is that when intra-resource frequency-hopping transmission of the positioning reference signal is performed on the resources for the positioning reference signal, the resource configuration information in method b for periodic positioning reference signals is carried in RRC signaling, while the resource configuration information in method b for aperiodic positioning reference signals is carried in DCI.

c. In an implementation, the resource configuration information comprises a second indication field for a resource set for the positioning reference signal, wherein a value of the second indication field being a first value indicates that intra-resource set frequency-hopping transmission of the positioning reference signal is to be performed on the resource set for the positioning reference signal.

Optionally, the resource configuration information further comprises a value of a second offset between two adjacent frequency hops within each resource in the resource set for the positioning reference signal. The terminal device determining the resources for the frequency-hopping transmission of the positioning reference signal based on the resource configuration information may comprise: determining resources in time domain for the positioning reference signal corresponding to a plurality of frequency hops, within each resource in the resource set for the positioning reference signal, based on the value of the second offset.

Further and optionally, the terminal device determining the resources in time domain for the positioning reference signal corresponding to a plurality of frequency hops within each resource in the resource set for the positioning reference signal based on the value of the second offset may comprise: determining a resource in time domain for the positioning reference signal corresponding to a first frequency hop, within each resource in the resource set for the positioning reference signal, based on a position of a starting symbol of each resource for the positioning reference signal; and determining resources in time domain for the positioning reference signal corresponding to frequency hops other than the first frequency hop of the plurality of frequency hops, within each resource for the positioning reference signal, based on the resource in time domain for the positioning reference signal corresponding to the first frequency hop within each resource for the positioning reference signal and the value of the second offset.

Optionally, the resource configuration information is carried in DCI. For aperiodic positioning reference signals, DCI is required to indicate whether intra-resource set frequency-hopping transmission of the positioning reference signal may be performed on the resource set for the positioning reference signal, i.e., 1 bit should be configured in DCI to indicate whether intra-resource set frequency-hopping transmission of the positioning reference signal may be performed on the resource set for the positioning reference signal.

It should be noted that when intra-resource set frequency-hopping transmission of the positioning reference signal is performed on the resource set for the positioning reference signal, method c for aperiodic positioning reference signals may be recited with reference to the descriptions of method c for periodic positioning reference signals mentioned above, which will not be repeated herein. The only difference is that when intra-resource set frequency-hopping transmission of the positioning reference signal is performed on the resource set for the positioning reference signal, the resource configuration information in method c for periodic positioning reference signals is carried in RRC signaling, while the resource configuration information in method c for aperiodic positioning reference signals is carried in DCI.

(2) Inter-resource frequency-hopping transmission of positioning reference signal on resources for positioning reference signal

A. Periodic positioning reference signal

a. In an implementation, the resource configuration information indicates that inter-resource frequency-hopping transmission of the positioning reference signal is to be performed on a plurality of resources for the positioning reference signal. The resource configuration information comprises a value of a third offset between two adjacent frequency hops across the plurality of resources for the positioning reference signal. The terminal device determining the resources for the frequency-hopping transmission of the positioning reference signal based on the resource configuration information may comprise: determining resources for the positioning reference signal corresponding to the plurality of frequency hops based on the value of the third offset and a resource for the positioning reference signal corresponding to a first frequency hop.

When the repetition factor R configured by the network device equals to a number of symbols occupied by the positioning reference signal in a slot, inter-resource frequency-hopping transmission of the positioning reference signal on the resources for the positioning reference signal may be implemented. That is, one transmission of the positioning reference signal consumes a full resource for the positioning reference signal, and one frequency hop may be considered as corresponding to one full resource for the positioning reference signal. At the same time, the network device further configures a value of a third offset between two adjacent frequency hops across a plurality of resources for the positioning reference signal. After the terminal device determines a resource for the positioning reference signal corresponding to a first frequency hop, it may determine resources for the positioning reference signal corresponding to other frequency hops in sequence based on the value of the third offset.

Optionally, the resource for the positioning reference signal corresponding to the first frequency hop is a first resource in time domain for the positioning reference signal of the plurality of resources in time domain for the positioning reference signal. That is to say, the resource for the positioning reference signal corresponding to the first frequency hop may be the first resource in time domain for the positioning reference signal of the plurality of resources in time domain for the positioning reference signal as stipulated by the protocol, which is beneficial for saving signaling resources.

Optionally, the information indicating the resource for the positioning reference signal corresponding to the first frequency hop may be carried in RRC signaling. That is to say, the resource for the positioning reference signal corresponding to the first frequency hop may be indicated by the network device via RRC signaling, which is beneficial for improving the flexibility of the resource for the positioning reference signal corresponding to the first frequency hop.

Optionally, the values of the third offsets between either two adjacent frequency hops across the plurality of resources for the positioning reference signal are the same. In this way, the periodicity of the positioning reference signal may be ensured.

Optionally, the resource configuration information is carried in DCI.

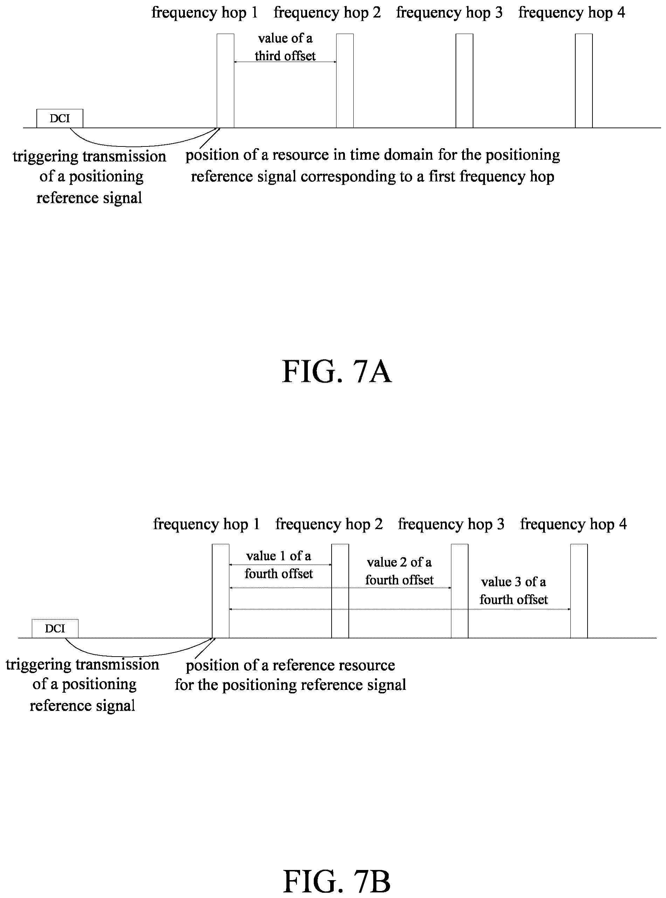

As shown in FIG. 7A, assuming that a resource for the positioning reference signal corresponding to a first frequency hop is a first resource in time domain for the positioning reference signal of the plurality of resources for the positioning reference signal. The resource configuration information is carried in DCI, and inter-resource frequency-hopping transmission of the positioning reference signal on a plurality of resources for the positioning reference signal is triggered by the DCI. The terminal device determines a position of the first resource in time domain for the positioning reference signal of the plurality of resources for the positioning reference signal as the position of the resource for the positioning reference signal corresponding to the first frequency hop (i.e., the resource for the positioning reference signal corresponding to a frequency hop 1). The terminal device then determines the resources for the positioning reference signal corresponding to other frequency hops in sequence according to the value of the third offset between two adjacent frequency hops across the plurality of resources for the positioning reference signal, i.e., a resource for the positioning reference signal corresponding to a frequency hop 2, a resource for the positioning reference signal corresponding to a frequency hop 3, and a resource for the positioning reference signal corresponding to a frequency hop 4.

Optionally, the plurality of resources for the positioning reference signal are resources for the positioning reference signal determined from one or more resource sets for the positioning reference signal of the positioning reference signal.

For example, the positioning reference signal corresponds to 3 resource sets for the positioning reference signal. 4 resources for the positioning reference signal are randomly selected from the 3 resource sets for the positioning reference signal. The resource configuration information may indicate inter-resource frequency-hopping transmission of the positioning reference signal is to be performed on the 4 resources for the positioning reference signal.

Optionally, the plurality of resources for the positioning reference signal are resources positioning reference signal with a same identifier determined from different resource sets for the positioning reference signal of the positioning reference signal.

For example, the positioning reference signal corresponds to 4 resource sets for the positioning reference signal, namely a resource set 1 for the positioning reference signal, a resource set 2 for the positioning reference signal, a resource set 3 for the positioning reference signal, and a resource set 4 for the positioning reference signal. The resource set 1 for the positioning reference signal includes a first resource 1 for the positioning reference signal and a first resource 2 for the positioning reference signal; the resource set 2 for the positioning reference signal includes a second resource 1 for the positioning reference signal and a second resource 2 for the positioning reference signal; the resource set 3 for the positioning reference signal includes a third resource 1 for the positioning reference signal and a third resource 2 for the positioning reference signal; the resource set 4 for the positioning reference signal includes a fourth resource 1 for the positioning reference signal and a fourth resource 2 for the positioning reference signal. 4 resources for the positioning reference signal with a same identifier are selected from these 4 resource sets for the positioning reference signal, i.e., the first resource 1 for the positioning reference signal, the second resource 1 for the positioning reference signal, the third resource 1 for the positioning reference signal, and the fourth resource 1 for the positioning reference signal. The resource configuration information may indicate that inter-resource frequency-hopping transmission of the positioning reference signal is to be performed on the 4 resources for the positioning reference signal.

b. In an implementation, the resource configuration information indicates that inter-resource frequency-hopping transmission of the positioning reference signal is to be performed on a plurality of resource for the positioning reference signal. The resource configuration information comprises a reference resource for the positioning reference signal and values of fourth offsets between the reference resource for the positioning reference signal and resources other than the reference resource for the positioning reference signal of the plurality of resources positioning reference signal. The terminal device determining the resources for the frequency-hopping transmission of the positioning reference signal based on the resource configuration information may comprise: determining resources for the positioning reference signal corresponding to a plurality of frequency hops based on the values of the fourth offsets and the reference resource for the positioning reference signal.

When the repetition factor R configured by the network device equals to the number of symbols occupied by a positioning reference signal in a slot, inter-resource frequency-hopping transmission of the positioning reference signal on the resources for the positioning reference signal may be implemented. That is, one transmission of the positioning reference signal consumes a full resource for the positioning reference signal, and one frequency hop may be considered as corresponding to a full resource for the positioning reference signal. At the same time, the network device further configures a reference resource for the positioning reference signal and values of fourth offsets between the reference resource for the positioning reference signal and resources other than the reference resource for the positioning reference signal of the plurality of resources for the positioning reference signal. After the terminal device determines the reference resource for the positioning reference signal, it may determine the resources for the positioning reference signal corresponding to other frequency hops in sequence according to the values of the fourth offsets.

Optionally, the resource configuration information is carried in DCI.

As shown in FIG. 7B, the resource configuration information is carried in DCI, and inter-resource frequency-hopping transmission of the positioning reference signal on a plurality of resources for the positioning reference signal is triggered by the DCI. The resource configuration information includes a reference resource for the positioning reference signal (i.e., a resource for the positioning reference signal corresponding to a frequency hop 1) and values of fourth offsets between the reference resource for the positioning reference signal and resources other than the reference resource for the positioning reference signal of the plurality of resources for the positioning reference signal (i.e., a value 1 of the fourth offset between the resource for the positioning reference signal corresponding to the frequency hop 1 and a resource for the positioning reference signal corresponding to a frequency hop 2, a value 2 of a fourth offset between the resource for the positioning reference signal corresponding to frequency hop 1 and a resource for the positioning reference signal corresponding to a frequency hop 3, and a value 3 of a fourth offset between the resource for the positioning reference signal corresponding to the frequency hop 1 and a resource for the positioning reference signal corresponding to a frequency hop 4). The terminal device determines the reference resource for the positioning reference signal (i.e., the resource for the positioning reference signal corresponding to the frequency hop 1) first, then determines the resource for the positioning reference signal corresponding to the frequency hop 2 according to the value 1 of the fourth offset and the reference resource for the positioning reference signal, determines the resource for the positioning reference signal corresponding to the frequency hop 3 according to the value 2 of the fourth offset and the reference resource for the positioning reference signal, and determines the resource for the positioning reference signal corresponding to the frequency hop 4 according to the value 3 of the fourth offset and the reference resource for the positioning reference signal.

Optionally, the plurality of resources for the positioning reference signal are resources for the positioning reference signal determined from one or more resource sets for the positioning reference signal of the positioning reference signal.

Optionally, the plurality of resources for the positioning reference signal are resources for the positioning reference signal with a same identifier determined from different resource sets for the positioning reference signal of the positioning reference signal.

B. Aperiodic positioning reference signal

a. In an implementation, the resource configuration information indicates that inter-resource frequency-hopping transmission of the positioning reference signal is to be performed on a plurality of resources for the positioning reference signal. The resource configuration information comprises a value of a third offset between two adjacent frequency hops across the plurality of resources for the positioning reference signal. The terminal device determining the resources for the frequency-hopping transmission of the positioning reference signal based on the resource configuration information may comprise: determining resources for the positioning reference signal corresponding to the plurality of frequency hops based on the value of the third offset and a resource for the positioning reference signal corresponding to a first frequency hop.

Optionally, a resource for the positioning reference signal corresponding to a first frequency hop is a first resource in time domain for the positioning reference signal of the plurality of resources for the positioning reference signal.

Optionally, the information indicating the resource for the positioning reference signal corresponding to the first frequency hop may be carried in RRC signaling.

Optionally, the values of the third offsets between either two adjacent frequency hops across the plurality of resources for the positioning reference signal are different. In this way, the aperiodicity of the positioning reference signal may be ensured.

Optionally, the resource configuration information is carried in DCI.

It should be noted that when inter-resource frequency-hopping transmission of the positioning reference signal is performed on the resources for the positioning reference signal, method a for aperiodic positioning reference signals may be recited with reference to the descriptions of method a for periodic positioning reference signals mentioned above, which will not be repeated herein.

b. In an implementation, the resource configuration information indicates that inter-resource frequency-hopping transmission of the positioning reference signal is to be performed on a plurality of resources for the positioning reference signal. The resource configuration information comprises a reference resource for the positioning reference signal and values of fourth offsets between the reference resource for the positioning reference signal and resources other than the reference resource for the positioning reference signal of the plurality of resources for the positioning reference signal. The terminal device determining the resources for the frequency-hopping transmission of the positioning reference signal based on the resource configuration information may comprise: determining resources for the positioning reference signal corresponding to a plurality of frequency hops based on the values of the fourth offsets and the reference resource for the positioning reference signal.

Optionally, the resource configuration information is carried in DCI.

Optionally, the plurality of resources for the positioning reference signal are resources for the positioning reference signal determined from one or more resource sets for the positioning reference signal of the positioning reference signal.

Optionally, the plurality of resources for the positioning reference signal are resources for the positioning reference signal with a same identifier determined from different resource sets for the positioning reference signal of the positioning reference signal.

It should be noted that when inter-resource frequency-hopping transmission of the positioning reference signal is performed on the resources for the positioning reference signal, method b for aperiodic positioning reference signals may be recited with reference to the descriptions of method b for periodic positioning reference signals mentioned above, which will not be repeated herein.

Of course, the resource configuration information may also include other configuration parameters mentioned above, such as a number of symbols occupied by the SRS within a slot, a number of repetitions per symbol, a total bandwidth of the SRS, etc., which are not limited herein.

When the radio frequency bandwidth of the terminal device is not wide enough for the terminal device to transmit or receive the positioning reference signal on one bandwidth simultaneously, the terminal device is required to transmit the positioning reference signal with frequency-hopping on different resources for the positioning reference signal. In this case, the method described in FIG. 4 may implement the resource configuration for the frequency-hopping transmission of the positioning reference signal, and may ensure that there is time between two adjacent frequency hops for the terminal device to adjust or switch radio frequency, thereby meeting the needs for positioning while ensuring data transmission.

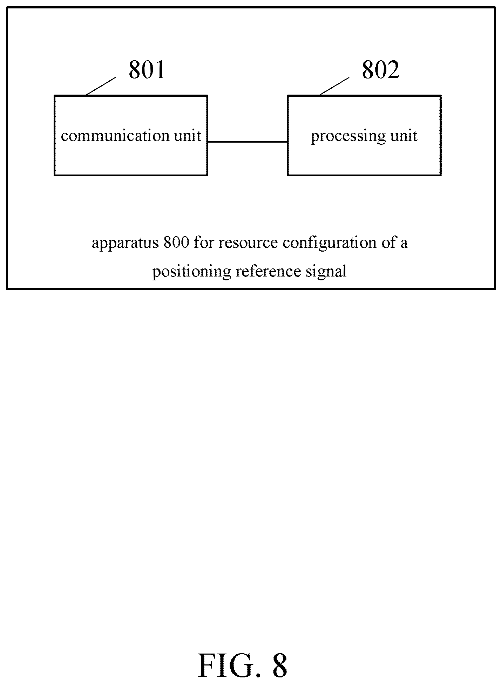

Referring to FIG. 8, FIG. 8 is a schematic structure diagram of an apparatus for resource configuration for a positioning reference signal provided by an embodiment of the present invention. The apparatus for resource configuration for a positioning reference signal may be a terminal device or an apparatus with the functionality of a terminal device (e.g., a chip). Specifically, as shown in FIG. 8, the apparatus 800 for resource configuration for a positioning reference signal may include a communication unit 801 and a processing unit 802. The processing unit 802 is configured for data processing. The communication unit 801 is configured for communication. Optionally, the communication unit 801 is integrated with a receiving unit and a transmitting unit. The communication unit 801 may also be referred to as a transceiver unit. Alternatively, the communication unit 801 may be split into a receiving unit and a transmitting unit. Where:

The communication unit 801 is configured to receive, from a network device, resource configuration information of a positioning reference signal, the resource configuration information configuring resources for frequency-hopping transmission of the positioning reference signal; and

The processing unit 802 is configured to determine the resources for the frequency-hopping transmission of the positioning reference signal based on the resource configuration information.

In an implementation, the resource configuration information comprises a transmission period of the positioning reference signal, one transmission period of the positioning reference signal comprising a plurality of transmission occasions for the positioning reference signal. The processing unit 802, when determining the resources for the frequency-hopping transmission of the positioning reference signal based on the resource configuration information, is further configured to: determine resources in frequency domain for the positioning reference signal corresponding to a first transmission occasion based on a number of transmissions corresponding to the first transmission occasion, the first transmission occasion being any one of the plurality of transmission occasions.

In an implementation, the plurality of transmission occasions correspond to one resource for the positioning reference signal; or the plurality of transmission occasions correspond to a plurality of resources for the positioning reference signal.

In an implementation, the transmission period of the positioning reference signal further comprises a time interval between two adjacent transmission occasions of the plurality of transmission occasions.

In an implementation, the number of transmissions corresponding to the first transmission occasion is determined based on: a number of transmission occasions contained in the transmission period of the positioning reference signal, an index value of the first transmission occasion, a numbering of the frame in which the first transmission occasion is located, a number of slots contained in each frame, a numbering of the slot in which the first transmission occasion is located, an offset value of a position of a starting slot of the positioning reference signal, and the transmission period of the positioning reference signal.

In an implementation, the resource configuration information comprises a number of transmissions, N, of the positioning reference signal, and N is an integer greater than 1. Determining the resources for the frequency-hopping transmission of the positioning reference signal based on the resource configuration information comprises: determining a resource for the positioning reference signal corresponding to an $n^{th}$ transmission of the positioning reference signal based on an index value of the $n^{th}$ transmission of the positioning reference signal, wherein n is any integer from $[1, N]$.

In an implementation, the resource configuration information is carried in Downlink Control Information (DCI).

In an implementation, the resource configuration information comprises a first indication field for resources for the positioning reference signal, wherein a value of the first indication field being a first value indicates that intra-resource frequency-hopping transmission of the positioning reference signal is to be performed on the resources for the positioning reference signal.

In an implementation, the resource configuration information further comprises a value of a first offset between two adjacent frequency hops within the resources for the positioning reference signal. The processing unit 802, when determining the resources for the frequency-hopping transmission of the positioning reference signal based on the resource configuration information, is further configured to: determine resources in time domain for the positioning reference signal corresponding to a plurality of frequency hops, within the resources for the positioning reference signal, based on the value of the first offset.

In an implementation, the processing unit 802, when determining the resources in time domain for the positioning reference signal corresponding to the plurality of frequency hops, within the resources for the positioning reference signal, based on the value of the first offset, is further configured to: determine a resource in time domain for the positioning reference signal corresponding to a first frequency hop, within the resources for the positioning reference signal, based on a position of a starting symbol of the resources for the positioning reference signal; and determine resources in time domain for the positioning reference signal corresponding to frequency hops other than the first frequency hop of the plurality of frequency hops, within the resources for the positioning reference signal based on the resource in time domain for the positioning reference signal corresponding to the first frequency hop and the value of the first offset.

In an implementation, the resource configuration information comprises a second indication field for a resource set for the positioning reference signal, wherein a value of the second indication field being a first value indicates that intra-resource set frequency-hopping transmission of the positioning reference signal is to be performed on the resource set for the positioning reference signal.

In an implementation, the resource configuration information further comprises a value of a second offset between two adjacent frequency hops within each resource in the resource set for the positioning reference signal. The processing unit 802, when determining the resources for the frequency-hopping transmission of the positioning reference signal based on the resource configuration information, is further configured to: determine resources in time domain for the positioning reference signal corresponding to a plurality of frequency hops, within each resource in the resource set for the positioning reference signal, based on the value of the second offset.

In an implementation, the processing unit 802, when determining resources in time domain for the positioning reference signal corresponding to a plurality of frequency hops, within each resource in the resource set for the positioning reference signal, based on the value of the second offset, is further configured to: determine a resource in time domain for the positioning reference signal corresponding to a first frequency hop, within each resource in the resource set for the positioning reference signal, based on a position of a starting symbol of each resource for the positioning reference signal; and determine resources in time domain for the positioning reference signal corresponding to frequency hops other than the first frequency hop of the plurality of frequency hops, within each resource for the positioning reference signal resource, based on the resource in time domain for the positioning reference signal corresponding to the first frequency hop within each resource for the positioning reference signal and the value of the second offset.

In an implementation, the resource configuration information is carried in Radio Resource Control (RRC) signaling or DCI.

In an implementation, the resource configuration information indicates that inter-resource frequency-hopping transmission of the positioning reference signal is to be performed on a plurality of resources for the positioning reference signal. The resource configuration information comprises a value of a third offset between two adjacent frequency hops across the plurality of resources for the positioning reference signal. The processing unit 802, when determining the resources for the frequency-hopping transmission of the positioning reference signal based on the resource configuration information, is further configured to: determine resources for the positioning reference signal corresponding to the plurality of frequency hops based on the value of the third offset and a resource for the positioning reference signal corresponding to a first frequency hop.

In an implementation, a resource for the positioning reference signal corresponding to a first frequency hop is a first resource in time domain for the positioning reference signal of the plurality of resources for the positioning reference signal.

In an implementation, the third offsets between either two adjacent frequency hops across the plurality of resources for the positioning reference signal have same or different values.

In an implementation, the resource configuration information indicates that inter-resource frequency-hopping transmission of the positioning reference signal is to be performed on a plurality of resources for the positioning reference signal. The resource configuration information comprises a reference resource for the positioning reference signal and values of fourth offsets between the reference resource for the positioning reference signal and resources other than the reference resource for the positioning reference signal of the plurality of resources for the positioning reference signal. Determining the resources for the frequency-hopping transmission of the positioning reference signal based on the resource configuration information comprises: determining resources for the positioning reference signal corresponding to a plurality of frequency hops based on the values of the fourth offsets and the reference resource for the positioning reference signal.

In an implementation, the plurality of resources for the positioning reference signal are resources for the positioning reference signal determined from one or more resource sets for the positioning reference signal of the positioning reference signal.

In an implementation, the plurality of resources for the positioning reference signal are resources for the positioning reference signal with a same identifier determined from different resource sets for the positioning reference signal of the positioning reference signal.

Referring to FIG. 8, FIG. 8 is a schematic structure diagram of an apparatus for resource configuration for a positioning reference signal provided by an embodiment of the present invention. The apparatus for resource configuration for a positioning reference signal may be a network device or an apparatus with the functionality of a network device (e.g., a chip). Specifically, as shown in FIG. 8, the apparatus 800 for resource configuration for a positioning reference signal may include a communication unit 801 and a processing unit 802. The processing unit 802 is configured for data processing. The communication unit 801 is configured for communication. Optionally, the communication unit 801 is integrated with a receiving unit and a transmitting unit. The communication unit 801 may also be referred to as a transceiver unit. Alternatively, the communication unit 801 may be split into a receiving unit and a transmitting unit. Where:

The communication unit 801 is configured to transmit resource configuration information of a positioning reference signal to a terminal device, the resource configuration information configuring resources for frequency-hopping transmissions of the positioning reference signal.

In an implementation, the resource configuration information comprises a transmission period of the positioning reference signal, one transmission period of the positioning reference signal comprising a plurality of transmission occasions for the positioning reference signal.

In an implementation, the plurality of transmission occasions correspond to one resource for the positioning reference signal; or the plurality of transmission occasions correspond to a plurality of resources for the positioning reference signal.

In an implementation, the transmission period of the positioning reference signal further comprises a time interval between two adjacent transmission occasions of the plurality of transmission occasions.

In an implementation, the resource configuration information comprises a number of transmissions, N, of the positioning reference signal, and N is an integer greater than 1.

In an implementation, the resource configuration information is carried in Downlink Control Information (DCI).

In an implementation, the resource configuration information comprises a first indication field for resources for the positioning reference signal, wherein a value of the first indication field being a first value indicates that intra-resource frequency-hopping transmission of the positioning reference signal is to be performed on the resources for the positioning reference signal.

In an implementation, the resource configuration information further comprises a value of a first offset between two adjacent frequency hops within the resources for the positioning reference signal.

In an implementation, the resource configuration information comprises a second indication field for a resource set for the positioning reference signal, wherein a value of the second indication field being a first value indicates that intra-resource set frequency-hopping transmission of the positioning reference signal is to be performed on the resource set for the positioning reference signal.

In an implementation, the resource configuration information further comprises a value of a second offset between two adjacent frequency hops within each resource in the resource set for the positioning reference signal.

In an implementation, the resource configuration information is carried in Radio Resource Control (RRC) signaling or DCI.

In an implementation, the resource configuration information indicates that inter-resource frequency-hopping transmission of the positioning reference signal is to be performed across a plurality of resources for the positioning reference signal. The resource configuration information comprises a value of a third offset between two adjacent frequency hops across the plurality of resources for the positioning reference signal.

In an implementation, a resource for the positioning reference signal corresponding to a first frequency hop across the plurality of resources for the positioning reference signal is a first resource in time domain for the positioning reference signal of the plurality of resources for the positioning reference signal.

In an implementation, the values of the third offsets between two adjacent frequency hops across the plurality of resources for the positioning reference signal are the same or are different.

In an implementation, the resource configuration information indicates that inter-resource frequency-hopping transmission of the positioning reference signal is to be performed across a plurality of resources for the positioning reference signal. The resource configuration information comprises a reference resource for the positioning reference signal and values of fourth offsets between the reference resource for the positioning reference signal and resources other than the reference resource for the positioning reference signal of the plurality of resources for the positioning reference signal.

In an implementation, the plurality of resources for the positioning reference signal are resources for the positioning reference signal determined from one or more resource sets for the positioning reference signal of the positioning reference signal.

In an implementation, the plurality of resources for the positioning reference signal are resources for the positioning reference signal with a same identifier determined from different resource sets for the positioning reference signal of the positioning reference signal.

An embodiment of the present application also provides a chip, and the chip may perform the related steps by the terminal device in the method embodiments mentioned above. The chip includes a processor and a communication interface. The processor is configured to cause the chip to: receive, from a network device, resource configuration information of a positioning reference signal, the resource configuration information configuring resources for frequency-hopping transmission of the positioning reference signal; and determine the resources for the frequency-hopping transmission of the positioning reference signal based on the resource configuration information.

In an implementation, the resource configuration information comprises a transmission period of the positioning reference signal, one transmission period of the positioning reference signal comprising a plurality of transmission occasions for the positioning reference signal, The chip, when determining the resources for the frequency-hopping transmission of the positioning reference signal based on the resource configuration information, is further configured to: determine resources in frequency domain for the positioning reference signal corresponding to a first transmission occasion based on a number of transmissions corresponding to the first transmission occasion, the first transmission occasion being any one of the plurality of transmission occasions.

In an implementation, the plurality of transmission occasions correspond to one resource for the positioning reference signal; or the plurality of transmission occasions correspond to a plurality of resources for the positioning reference signal.

In an implementation, the transmission period of the positioning reference signal further comprises a time interval between two adjacent transmission occasions of the plurality of transmission occasions.

In an implementation, the number of transmissions corresponding to the first transmission occasion is determined based on: a number of transmission occasions contained in the transmission period of the positioning reference signal, an index value of the first transmission occasion, a numbering of the frame in which the first transmission occasion is located, a number of slots contained in each frame, a numbering of the slot in which the first transmission occasion is located, an offset value of a position of a starting slot of the positioning reference signal, and the transmission period of the positioning reference signal.

In an implementation, the resource configuration information comprises a number of transmissions, N, of the positioning reference signal, and N is an integer greater than 1,The chip, when determining the resources for the frequency-hopping transmission of the positioning reference signal based on the resource configuration information, is further configured to: determine a resource for the positioning reference signal corresponding to a $n^{th}$ transmission of the positioning reference signal based on an index value of the $n^{th}$ transmission of the positioning reference signal, and n is any integer from [1, N].

In an implementation, the resource configuration information is carried in Downlink Control Information (DCI).

In an implementation, the resource configuration information comprises a first indication field for resources for the positioning reference signal, wherein a value of the first indication field being a first value indicates that intra-resource frequency-hopping transmission of the positioning reference signal is to be performed on the resources for the positioning reference signal.

In an implementation, the resource configuration information further comprises a value of a first offset between two adjacent frequency hops within the resources for the positioning reference signal. The chip, when determining the resources for the frequency-hopping transmission of the positioning reference signal based on the resource configuration information, is further configured to: determine resources in time domain for the positioning reference signal corresponding to a plurality of frequency hops, within the resources for the positioning reference signal, based on the value of the first offset.

In an implementation, the chip, when determining the resources for the positioning reference signal corresponding to the plurality of frequency hops, within the resources for the the positioning reference signal, based on the value of the first offset, is further configured to: determine a resource in time domain for the positioning reference signal corresponding to a first frequency hop, within the resources for the positioning reference signal, based on a position of a starting symbol of the resources for the positioning reference signal; and determine resources in time domain for the positioning reference signal corresponding to frequency hops other than the first frequency hop of the plurality of frequency hops, within the resources for the positioning reference signal based on the resource in time domain for the positioning reference signal corresponding to the first frequency hop and the value of the first offset.

In an implementation, the resource configuration information comprises a second indication field for a resource set for the positioning reference signal, wherein a value of the second indication field being a first value indicates that intra-resource set frequency-hopping transmission of the positioning reference signal is to be performed on the resource set for the positioning reference signal.

In an implementation, the resource configuration information further comprises a value of a second offset between two adjacent frequency hops within each resource in the resource set for the positioning reference signal. The chip, when determining the resources for the frequency-hopping transmission of the positioning reference signal based on the resource configuration information, is further configured to: determine resources in time domain for the positioning reference signal corresponding to a plurality of frequency hops, within each resource in the resource set for the positioning reference signal, based on the value of the second offset.

In an implementation, the chip, when determining resources in time domain for the positioning reference signal corresponding to a plurality of frequency hops, within each resource in the resource set for the positioning reference signal, based on the value of the second offset, is further configured to: determine a resource in time domain for the positioning reference signal corresponding to a first frequency hop, within each resource in the resource set for the positioning reference signal, based on a position of a starting symbol of each resource for the positioning reference signal; and determine resources in time domain for the positioning reference signal corresponding to frequency hops other than the first frequency hop of the plurality of frequency hops, within each resource for the positioning reference signal, based on the resource in time domain for the positioning reference signal corresponding to the first frequency hop with each resource for the positioning reference signal and the value of the second offset.

In an implementation, the resource configuration information is carried in Radio Resource Control (RRC) signaling or DCI.

In an implementation, the resource configuration information indicates that inter-resource frequency-hopping transmission of the positioning reference signal is to be performed across a plurality of resources for the positioning reference signal. The resource configuration information comprises a value of a third offset between two adjacent frequency hops across the plurality of resources for the positioning reference signal. The chip, when determining the resources for the frequency-hopping transmission of the positioning reference signal based on the resource configuration information, is further configured to: determining resources for the positioning reference signal corresponding to the plurality of frequency hops based on the value of the third offset and a resource for the positioning reference signal corresponding to a first frequency hop.

In an implementation, a resource for the positioning reference signal corresponding to a first frequency hop is a first resource in time domain for the positioning reference signal of the plurality of resources for the positioning reference signal.

In an implementation, the values of the third offsets between either two adjacent frequency hops across the plurality of resources for the positioning reference signal are the same or are different.

In an implementation, the resource configuration information indicates that inter-resource frequency-hopping transmission of the positioning reference signal is to be performed across a plurality of resources for the positioning reference signal. The resource configuration information comprises a reference resource for the positioning reference signal and values of fourth offsets between the reference resource for the positioning reference signal and resources other than the reference resource for the positioning reference signal of the plurality of resources for the positioning reference signal resources. The chip, when determining the resources for the frequency-hopping transmission of the positioning reference signal based on the resource configuration information, is further configured to: determining resources for the positioning reference signal corresponding to a plurality of frequency hops based on the values of fourth offsets and the reference resource for the positioning reference signal.

In an implementation, the plurality of resources for the positioning reference signal are resources for the positioning reference signal determined from one or more resource sets for the positioning reference signal of the positioning reference signal.

In an implementation, the plurality of resources for the positioning reference signal are resources for the positioning reference signal with a same identifier determined from different resource sets for the positioning reference signal of the positioning reference signal.

For apparatuses or products applied to or integrated into a chip, each module included may be implemented in hardware such as circuits, or at least some modules may be implemented by software programs executing on a processor integrated into the chip, and the remaining (if any) modules may be implemented in hardware such as circuits.

An embodiment of the present application also provides a chip, and the chip may perform the related steps by the network device in the method embodiments mentioned above. The chip includes a processor and a communication interface. The processor is configured to cause the chip to: transmit resource configuration information of a positioning reference signal to a terminal device, the resource configuration information configuring resources for frequency-hopping transmission of the positioning reference signal.

In an implementation, the resource configuration information comprises a transmission period of the positioning reference signal, one transmission period of the positioning reference signal comprising a plurality of transmission occasions for the positioning reference signal.

In an implementation, the plurality of transmission occasions correspond to one resource for the positioning reference signal; or the plurality of transmission occasions correspond to a plurality of resources for the positioning reference signal.

In an implementation, the transmission period of the positioning reference signal further comprises a time interval between two adjacent transmission occasions of the plurality of transmission occasions.

In an implementation, the resource configuration information comprises a number of transmissions, N, of the positioning reference signal, and N is an integer greater than 1.

In an implementation, the resource configuration information is carried in Downlink Control Information (DCI).

In an implementation, the resource configuration information comprises a first indication field for resources for the positioning reference signal, wherein a value of the first indication field being a first value indicates that intra-resource frequency-hopping transmission of the positioning reference signal is to be performed on the resources for the positioning reference signal.

In an implementation, the resource configuration information further comprises a value of a first offset between two adjacent frequency hops within the resources for the positioning reference signal.

In an implementation, the resource configuration information comprises a second indication field for a resource set for the positioning reference signal, wherein a value of the second indication field being a first value indicates that intra-resource set frequency-hopping transmission of the positioning reference signal is to be performed on the resource set for the positioning reference signal.

In an implementation, the resource configuration information further comprises a value of a second offset between two adjacent frequency hops within each resource in the resource set for the positioning reference signal.

In an implementation, the resource configuration information is carried in Radio Resource Control (RRC) signaling or DCI.

In an implementation, the resource configuration information indicates that inter-resource frequency-hopping transmission of the positioning reference signal is to be performed across a plurality of resources for the positioning reference signal. The resource configuration information comprises a value of a third offset between two adjacent frequency hops across the plurality of resources for the positioning reference signal.

In an implementation, a resource for the positioning reference signal corresponding to a first frequency hop across the plurality of resources for the positioning reference signal is a first resource in time domain for the positioning reference signal of the plurality of resources for the positioning reference signal.

In an implementation, the values of the third offsets between two adjacent frequency hops across the plurality of resources for the positioning reference signal are the same or are different.

In an implementation, the resource configuration information indicates that inter-resource frequency-hopping transmission of the positioning reference signal is to be performed across a plurality of resources for the positioning reference signal. The resource configuration information comprises a reference resource for the positioning reference signal and values of fourth offsets between the reference resource for the positioning reference signal and resources other than the reference resource for the positioning reference signal of the plurality of resources for the positioning reference signal.

In an implementation, the plurality of resources for the positioning reference signal are resources for the positioning reference signal determined from one or more resource sets for the positioning reference signal of the positioning reference signal.

In an implementation, the plurality of resources for the positioning reference signal are resources for the positioning reference signal with a same identifier determined from different resource sets for the positioning reference signal of the positioning reference signal.

For apparatuses or products applied to or integrated into a chip, each module included may be implemented in hardware such as circuits, or at least some modules may be implemented by software programs executing on a processor integrated into the chip, and the remaining (if any) modules may be implemented in hardware such as circuits.

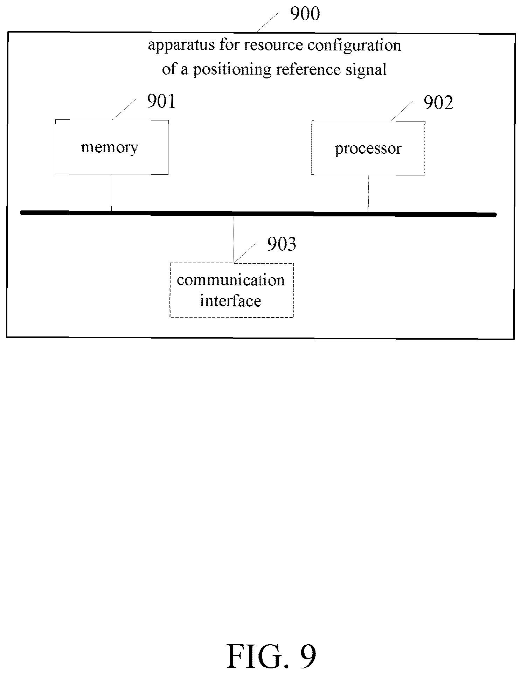

Referring to FIG. 9, FIG. 9 is a schematic structure diagram of an apparatus for resource configuration for a positioning reference signal provided by an embodiment of the present application. The apparatus 900 for resource configuration for a positioning reference signal may include a memory 901 and a processor 902. Optionally, it further includes a communication interface 903. The memory 901, the processor 902, and the communication interface 903 are connected via one or more communication buses. The communication interface 903 receives or transmits information under the control of the processor 902.

The memory 901 may include read-only memory and random access memory, and provides instructions and data to the processor 902. A part of the memory 901 may also include non-volatile random access memory.

The communication interface 903 is configured to receive or transmit data.

The processor 902 may be a Central Processing Unit (CPU), or the processor 902 may be another general-purpose processor, a Digital Signal Processor (DSP), an Application Specific Integrated Circuit (ASIC), a Field-Programmable Gate Array (FPGA), or another programmable logic device, discrete gate or transistor logic device, discrete hardware component, etc. The general-purpose processor may be a microprocessor, or optionally, the processor 902 may be any conventional processor, etc. Where:

The memory 901 is configured to store program instructions.

The processor 902 is configured to invoke the program instructions stored in the memory 901.

The processor 902 invokes the program instructions stored in the memory 901 to cause the apparatus 900 for resource configuration for a positioning reference signal to perform the method performed by the network device or the terminal device in the method embodiments mentioned above.

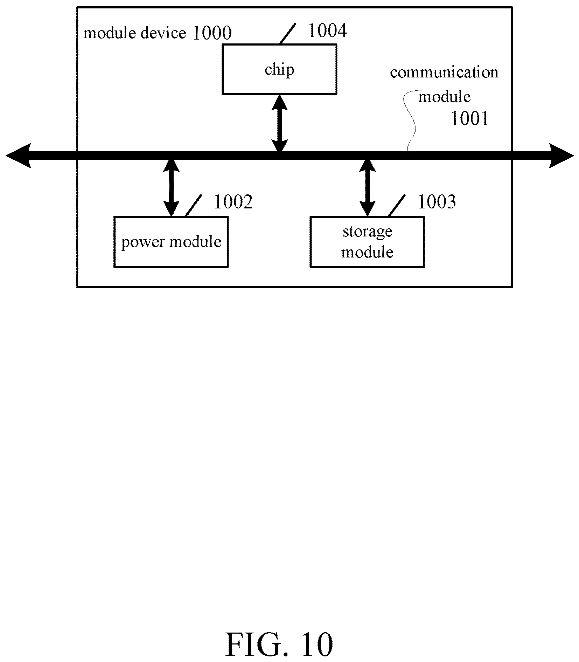

Referring to FIG. 10, FIG. 10 is a schematic structure diagram of a module device provided by an embodiment of the present application. The module device 1000 may perform the related steps by the network device or the terminal device in the method embodiments mentioned above. The module device 1000 includes: a communication module 1001, a power module 1002, a storage module 1003, and a chip 1004.

The power module 1002 is configured to provide power for the module device. The storage module 1003 is configured to store data and instructions. The communication module 1001 is configured for internal communication within the module device, or for communication between the module device and external devices. The chip 1004 is configured to perform the method performed by the network device or the terminal device in the method embodiments mentioned above.

It should be noted that content not mentioned in the embodiments corresponding to FIG. 8 to FIG. 10 and the detailed implementation of each step may be provided with reference to the embodiment shown in FIG. 4 and the above contents, and will not be repeated herein.

An embodiment of the present application also provides a computer-readable storage medium having instructions stored therein, and when the instructions are executed on a processor, the flow of the method embodiments mentioned above is implemented.

An embodiment of the present application also provides a computer program product, when being executed on a processor, the flow of the method embodiments mentioned above is implemented

Regarding the various modules/units included in each device/product described in the above embodiments, they may be software modules/units, hardware modules/units, or partly software modules/units and partly hardware modules/units. For example, for apparatuses or products applied to or integrated into a chip, each module/unit included may be implemented in hardware such as circuits, or at least some modules/units may be implemented in software programs executing on a processor integrated into the chip, and the remaining (if any) modules/units may be implemented in hardware such as circuits; for apparatuses or products applied to or integrated into a chip module, each module/unit included may be implemented in hardware such as circuits, and different modules/units may be located in the same component (e.g., chip, circuit module, etc.) or different components of the chip module, or at least some modules/units may be implemented in software programs executing on a processor integrated into a chip module, and the remaining (if any) modules/units may be implemented in hardware such as circuits; for apparatuses or products applied to or integrated into a terminal, each module/unit included may be implemented in hardware such as circuits, different modules/units may be located in the same component (e.g., chip, circuit module, etc.) or different components of the terminal, or at least some modules/units may be implemented in software programs executing on a processor integrated into the terminal, and the remaining (if any) modules/units may be implemented in hardware such as circuits.

It should be noted that for the method embodiments mentioned above, they are recited as a series of combination of actions for simplification of description. However, those skilled in the art should understand that the present application is not limited by the described sequence of actions, as some steps may be performed in other sequences or simultaneously according to the present application. Secondly, those skilled in the art should also understand that the embodiments described in the specification are all preferred embodiments, and not all the actions and modules are necessarily required by the present application.

The descriptions of the various embodiments provided in the present application may be cross-referenced, and the description of each embodiment focuses on different subject matter. Any details omitted from certain embodiment are provided in the relevant descriptions of other embodiments. For the convenience and clarity of description, for example, the functions of the apparatuses and devices provided by the embodiments of the present application and the operations performed may make reference to the related descriptions of the method embodiments of the present application. The various method and apparatus embodiments may also refer to, combine with, or quote each other.

Finally, it should be noted that: the above embodiments only illustrate the technical solutions of the present application, but not to pose limitation on them. Although detailed description of the present application has been illustrated with reference to the above embodiments, those of ordinary skill in the art should understand that: they may still modify the technical solutions described in the above embodiments, or replace some of the technical features equivalently. Such modifications or replacements do not deviate the essence of the corresponding technical solutions from the scope of the technical solutions of the embodiments of the present application.

**Claims**

1. A method for resource configuration for a positioning reference signal, comprising:

   receiving, from a network device, resource configuration information of a positioning reference signal, the resource configuration information configuring resources for frequency-hopping transmission of the positioning reference signal; and
   determining resources for the frequency-hopping transmission of the positioning reference signal based on the resource configuration information.

2. The method according to claim 1, wherein the resource configuration information comprises a transmission period of the positioning reference signal, one transmission period of the positioning reference signal comprising a plurality of transmission occasions for the positioning reference signal,
   the determining resources for the frequency-hopping transmission of the positioning reference signal based on the resource configuration information comprises:
   determining resources in frequency domain for the positioning reference signal corresponding to a first transmission occasion based on a number of transmissions corresponding to the first transmission occasion, the first transmission occasion being any one of the plurality of transmission occasions.

3. The method according to claim 2, wherein the plurality of transmission occasions correspond to one resource for the positioning reference signal; or the plurality of transmission occasions correspond to a plurality of resources for the positioning reference signal.

4. The method according to claim 2, wherein the transmission period of the positioning reference signal further comprises a time interval between two adjacent transmission occasions of the plurality of transmission occasions.

5. The method according to any one of claim 2 to claim 4, wherein the number of transmissions corresponding to the first transmission occasion is determined based on: a number of transmission occasions contained in the transmission period of the positioning reference signal, an index value of the first transmission occasion, a numbering of a frame in which the first transmission occasion is located, a number of slots contained in each frame, a numbering of a slot in which the first transmission occasion is located, an offset value of a position of a starting slot of the positioning reference signal, and the transmission period of the positioning reference signal.

6. The method according to claim 1, wherein the resource configuration information comprises a number of transmissions, N, of the positioning reference signal, wherein N is an integer greater than 1,
   the determining resources for the frequency-hopping transmission of the positioning reference signal based on the resource configuration information comprises:
   determining a resource for the positioning reference signal corresponding to a $n^{th}$ transmission of the positioning reference signal based on an index value of the $n^{th}$ transmission of the positioning reference signal, wherein n is any integer from [1, N].

**7.** The method according to claim 6, wherein the resource configuration information is carried in Downlink Control Information (DCI).

**8.** The method according to claim 1, wherein the resource configuration information comprises a first indication field for resources for the positioning reference signal, wherein a value of the first indication field being a first value indicates that intra-resource frequency-hopping transmission of the positioning reference signal is to be performed on the resources for the positioning reference signal.

**9.** The method according to claim 8, wherein the resource configuration information further comprises a value of a first offset between two adjacent frequency hops within the resources for the positioning reference signal,
the determining resources for the frequency-hopping transmission of the positioning reference signal based on the resource configuration information comprises:
determining resources in time domain for the positioning reference signal corresponding to a plurality of frequency hops, within the resources for the positioning reference signal, based on the value of the first offset.

**10.** The method according to claim 9, wherein the determining resources in time domain for the positioning reference signal corresponding to the plurality of frequency hops, within the resources for the positioning reference signal, based on the value of the first offset comprises:

   determining a resource in time domain for the positioning reference signal corresponding to a first frequency hop, within the resources for the positioning reference signal, based on a position of a starting symbol of the resources for the positioning reference signal; and
   determining resources in time domain for the positioning reference signal corresponding to frequency hops other than the first frequency hop of the plurality of frequency hops, within the resources for the positioning reference signal based on the resource in time domain for the positioning reference signal corresponding to the first frequency hop and the value of the first offset.

**11.** The method according to claim 1, wherein the resource configuration information comprises a second indication field for a resource set for the positioning reference signal, wherein a value of the second indication field being a first value indicates that intra-resource set frequency-hopping transmission of the positioning reference signal is to be performed on the resource set for the positioning reference signal.

**12.** The method according to claim 11, wherein the resource configuration information further comprises a value of a second offset between two adjacent frequency hops within each resource in the resource set for the positioning reference signal,
the determining resources for the frequency-hopping transmission of the positioning reference signal based on the resource configuration information comprises:
determining resources in time domain for the positioning reference signal corresponding to a plurality of frequency hops, within each resource in the resource set for the positioning reference signal, based on the value of the second offset.

**13.** The method according to claim 12, wherein the determining resources in time domain for the positioning reference signal corresponding to a plurality of frequency hops, within each resource in the resource set for the positioning reference signal, based on the value of the second offset comprises:

   determining a resource in time domain for the positioning reference signal corresponding to a first frequency hop, within each resource in the resource set for the positioning reference signal, based on a position of a starting symbol of each resource for the positioning reference signal; and
   determining resources in time domain for the positioning reference signal corresponding to frequency hops other than the first frequency hop of the plurality of frequency hops, within each resource in the resource set for the positioning reference signal, based on the resource in time domain for the positioning reference signal corresponding to the first frequency hop and the value of the second offset.

**14.** The method according to any one of claim 8 to claim 13, wherein the resource configuration information is carried in Radio Resource Control (RRC) signaling or DCI.

**15.** The method according to claim 1, wherein the resource configuration information indicates that inter-resource frequency-hopping transmission of the positioning reference signal is to be performed across a plurality of resources for the positioning reference signal, the resource configuration information comprising a value of a third offset between two adjacent frequency hops across the plurality of resources for the positioning reference signal, the determining resources for the frequency-hopping transmission of the positioning reference signal based on the resource configuration information comprises: determining resources for the positioning reference signal corresponding to the plurality of frequency hops based on the value of the third offset and a resource for the positioning reference signal corresponding to a first frequency hop.

16. The method according to claim 15, wherein the resource for the positioning reference signal corresponding to the first frequency hop is a first resource in time domain for the positioning reference signal of the plurality of resources for the positioning reference signal.

17. The method according to claim 15 or 16, wherein the values of the third offsets between either two adjacent frequency hops across the plurality of resources for the positioning reference signal are the same or are different.

18. The method according to claim 1, wherein the resource configuration information indicates that inter-resource frequency-hopping transmission of the positioning reference signal is to be performed across a plurality of resources for the positioning reference signal, the resource configuration information comprising a reference resource for the positioning reference signal and values of fourth offsets between the reference resource for the positioning reference signal and resources other than the reference resource for the positioning reference signal of the plurality of resources for the positioning reference signal; the determining resources for the frequency-hopping transmission of the positioning reference signal based on the resource configuration information comprises: determining resources for the positioning reference signal corresponding to a plurality of frequency hops based on the values of the fourth offsets and the reference resource for the positioning reference signal.

19. The method according to any one of claim 15 to claim 18, wherein the plurality of resources for the positioning reference signal are resources for the positioning reference signal determined from one or more resource sets for the positioning reference signal of the positioning reference signal.

20. The method according to any one of claim 15 to claim 18, wherein the plurality of resources for the positioning reference signal are resources for the positioning reference signal with a same identifier determined from different resource sets for the positioning reference signal of the positioning reference signal.

21. A method for resource configuration for a positioning reference signal, comprising: transmitting resource configuration information of a positioning reference signal to a terminal device, the resource configuration information configuring resources for frequency-hopping transmission of the positioning reference signal.

22. The method according to claim 21, wherein the resource configuration information comprises a transmission period of the positioning reference signal, one transmission period of the positioning reference signal comprising a plurality of transmission occasions for the positioning reference signal.

23. The method according to claim 22, wherein the plurality of transmission occasions correspond to one resource for the positioning reference signal; or the plurality of transmission occasions correspond to a plurality of resources for the positioning reference signal.

24. The method according to claim 22, wherein the transmission period of the positioning reference signal further comprises a time interval between two adjacent transmission occasions of the plurality of transmission occasions.

25. The method according to claim 21, wherein the resource configuration information comprises a number of transmissions, N, of the positioning reference signal, and N is an integer greater than 1.

26. The method according to claim 25, wherein the resource configuration information is carried in Downlink Control Information (DCI).

27. The method according to claim 21, wherein the resource configuration information comprises a first indication field for resources for the positioning reference signal, wherein a value of the first indication field being a first value indicates that intra-resource frequency-hopping transmission of the positioning reference signal is to be performed on the resources for the positioning reference signal.

28. The method according to claim 27, wherein the resource configuration information further comprises a value of a first offset between two adjacent frequency hops within the resources for the positioning reference signal.

29. The method according to claim 21, wherein the resource configuration information comprises a second indication field for a resource set for the positioning reference signal, wherein a value of the second indication field being a first value indicates that intra-resource set frequency-hopping transmission of the positioning reference signal is to be performed on the resource set for the positioning reference signal.

30. The method according to claim 29, wherein the resource configuration information further comprises a value of a second offset between two adjacent frequency hops within each resource in the resource set for the positioning reference signal.

31. The method according to any one of claim 27 to claim 30, wherein the resource configuration information is carried in Radio Resource Control (RRC) signaling or DCI.

32. The method according to claim 21, wherein the resource configuration information indicates that inter-resource frequency-hopping transmission of the positioning reference signal is to be performed across a plurality of resources for the positioning reference signal, the resource configuration information comprising a value of a third offset between two adjacent frequency hops across the plurality of resources for the positioning reference signal.

33. The method according to claim 32, wherein a resource for the positioning reference signal corresponding to a first frequency hop across the plurality of resources for the positioning reference signal is a first resource in time domain for the positioning reference signal of the plurality of resources for the positioning reference signal.

34. The method according to claim 32 or 33, wherein the values of the third offsets between either two adjacent frequency hops across the plurality of resources for the positioning reference signal are the same or are different.

35. The method according to claim 21, wherein the resource configuration information indicates that inter-resource frequency-hopping transmission of the positioning reference signal is to be performed across a plurality of resources for the positioning reference signal, the resource configuration information comprising a reference resource for the positioning reference signal and values of fourth offsets between the reference resource for the positioning reference signal and resources other than the reference resource for the positioning reference signal of the plurality of resources for the positioning reference signal.

36. The method according to any one of claim 32 to claim 35, wherein the plurality of resources for the positioning reference signal are resources for the positioning reference signal determined from one or more resource sets for the positioning reference signal of the positioning reference signal.

37. The method according to any one of claim 32 to claim 35, wherein the plurality of resources for the positioning reference signal are resources for the positioning reference signal with a same identifier determined from different resource sets for the positioning reference signal of the positioning reference signal.

38. An apparatus for resource configuration for a positioning reference signal, comprising:

a communication unit for receiving, from a network device, resource configuration information of a positioning reference signal, the resource configuration information configuring resources for frequency-hopping transmission of the positioning reference signal; and
a processing unit for determining resources for the frequency-hopping transmission of the positioning reference signal based on the resource configuration information.

39. An apparatus for resource configuration for a positioning reference signal, comprising:
a communication unit for transmitting resource configuration information of a positioning reference signal to a terminal device, the resource configuration information configuring resources for frequency-hopping transmission of the positioning reference signal.

40. A chip comprising a processor and a communication interface, wherein the processor is configured to cause the chip to perform the method according to any one of claims 1-20, or the processor is configured to cause the chip to perform the method according to any one of claims 21-37.

41. A module device comprising a communication module, a power module, a storage module, and a chip, wherein:

the power module is configured to provide power for the module device;
the storage module is configured to store data and instructions;
the communication module is configured for internal communication within the module device, or for communication between the module device and external devices; and
the chip is configured to perform the method according to any one of claims 1-20, or the chip is configured to perform the method according to any one of claims 21-37.

42. An apparatus for resource configuration for a positioning reference signal, comprising a memory and a processor, wherein the memory stores computer programs comprising program instructions, and the processor is configured to invoke the program instructions to cause the apparatus for the resource configuration for the positioning reference signal to perform the method according to any one of claims 1-20, or to cause the apparatus for the resource configuration for the positioning reference signal to perform the method according to any one of claims 21-37.

43. A computer-readable storage medium having computer-readable instructions stored therein, wherein the computer-readable instructions, when being executed on an apparatus for resource configuration for a positioning reference signal, cause the apparatus for the resource configuration for the positioning reference signal to perform the method according to any one of claims 1-20, or cause the apparatus for the resource configuration for the positioning reference signal to perform the method according to any one of claims 21-37.

terminal device

network device

FIG. 1

1 slot

0  1  2  3  4  5  6  7  8  9  10  11  12  13

$N_{symb}^{SRS} = 1$      $l_{offset} = 2$      $l_0 = 11$

# FIG. 2A

1 slot

0  1  2  3  4  5  6  7  8  9  10  11  12  13

$N_{symb}^{SRS} = 4$      $l_{offset} = 3$      $l_0 = 10$

# FIG. 2B

total bandwidth of SRS

slot

FIG. 3

network
device

terminal
device

S401, the network device transmits resource
configuration information of a positioning reference
signal to the terminal device

S402, the terminal device determines
resources for the frequency hopping
transmission of the positioning reference
signal based on the resource configuration
information

# FIG. 4

a transmission occasion
for a positioning
reference signal
(transmission occasion1)

resource
window

preset time interval

transmission period of the positioning reference signal

FIG. 5

frequency hop 4

frequency hop 3

value of a
first offset

resources for the
positioning reference signal

frequency hop 2

frequency hop 1

position of a resource in time domain for the positioning
reference signal corresponding to a first frequency hop

## FIG. 6A

frequency hop 4

value of a
first offset

frequency hop 3

frequency hop 1

frequency hop 2

DCI

triggering transmission
of a positioning
reference signal

position of a resource in time domain for the positioning
reference signal corresponding to a first frequency hop

## FIG. 6B

frequency hop 1    frequency hop 2    frequency hop 3    frequency hop 4

value of a
third offset

DCI

triggering transmission          position of a resource in time domain for the positioning
   of a positioning               reference signal corresponding to a first frequency hop
  reference signal

# FIG. 7A

frequency hop 1    frequency hop 2    frequency hop 3    frequency hop 4

value 1 of a
fourth offset

value 2 of a
fourth offset

value 3 of a
fourth offset

DCI

triggering transmission          position of a reference resource
   of a positioning               for the positioning reference signal
  reference signal

# FIG. 7B

801

802

communication unit

processing unit

apparatus 800 for resource configuration of a
positioning reference signal

FIG. 8

900

apparatus for resource configuration
of a positioning reference signal

901

902

memory

processor

903

communication
interface

FIG. 9

module device 1000        1004

chip

communication
module
1001

1002

power module

1003

storage
module

# FIG. 10

## INTERNATIONAL SEARCH REPORT

| International application No. |
|---|
| **PCT/CN2024/085717** |

| A. | CLASSIFICATION OF SUBJECT MATTER |
|---|---|
| | H04W 72/0446(2023.01)i |

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, DWPI, ENTXT, ENTXTC, VEN, 3GPP: 定位, 配置, 探测参考, 跳频, 信号, 资源, 频域, 时域, 周期, 次数, 间隔, 偏移, configur+, SRS, frequency, hop, signal, resource, time, period, number, interval, offset

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115189851 A (SPREADTRUM COMMUNICATIONS (SHANGHAI) CO., LTD.) 14 October 2022 (2022-10-14)<br>description, paragraphs 50-249, and figures 1-8 | 1-43 |
| X | CN 111490860 A (HUAWEI TECHNOLOGIES CO., LTD.) 04 August 2020 (2020-08-04)<br>description, paragraphs 52-136, and figures 1-10 | 1-43 |
| X | CN 114467274 A (QUALCOMM INC.) 10 May 2022 (2022-05-10)<br>description, paragraphs 56-170, and figures 1-22 | 1-43 |
| X | US 2021075646 A1 (LG ELECTRONICS, INC.) 11 March 2021 (2021-03-11)<br>description, paragraphs 41-295, and figures 1-15 | 1-43 |
| X | US 2023030823 A1 (QUALCOMM INC.) 02 February 2023 (2023-02-02)<br>description, paragraphs 64-223, and figures 1-18 | 1-43 |
| X | WO 2019047940 A1 (ZTE CORP.) 14 March 2019 (2019-03-14)<br>description, page 6, line 25-page 45, line 5, and figures 1-15 | 1-43 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 June 2024** | **28 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/085717** |

| C. | DOCUMENTS CONSIDERED TO BE RELEVANT | |
| --- | --- | --- |
| Category* | Citation of document, with indication, where appropriate, of the relevant passages | Relevant to claim No. |
| X | WO 2022067802 A1 (GUANGDONG OPPO MOBILE TELECOMMUNICATIONS CORP., LTD.) 07 April 2022 (2022-04-07)<br>description, page 3, paragraph 1-page 18, last paragraph, and figures 1-17 | 1-43 |
| X | WO 2022151502 A1 (GUANGDONG OPPO MOBILE TELECOMMUNICATIONS CORP., LTD.) 21 July 2022 (2022-07-21)<br>description, page 2, line 18-page 16, line 45, and figures 1-10 | 1-43 |
| A | WO 2023011550 A1 (DATANG MOBILE COMMUNICATIONS EQUIPMENT CO., LTD.) 09 February 2023 (2023-02-09)<br>entire document | 1-43 |

Form PCT/ISA/210 (second sheet) (July 2022)

## INTERNATIONAL SEARCH REPORT
### Information on patent family members

International application No.

**PCT/CN2024/085717**

| Patent document cited in search report | | | Publication date (day/month/year) | Patent family member(s) | | | Publication date (day/month/year) |
|---|---|---|---|---|---|---|---|
| CN | 115189851 | A | 14 October 2022 | WO | 2022213653 | A1 | 13 October 2022 |
| CN | 111490860 | A | 04 August 2020 | WO | 2020143689 | A1 | 16 July 2020 |
| CN | 114467274 | A | 10 May 2022 | TW | 202131655 | A | 16 August 2021 |
| | | | | EP | 4038801 | A1 | 10 August 2022 |
| | | | | WO | 2021067008 | A1 | 08 April 2021 |
| | | | | US | 2021105040 | A1 | 08 April 2021 |
| | | | | IN | 202247013162 | A | 18 March 2022 |
| US | 2021075646 | A1 | 11 March 2021 | WO | 2019135651 | A1 | 11 July 2019 |
| US | 2023030823 | A1 | 02 February 2023 | WO | 2021159399 | A1 | 19 August 2021 |
| | | | | KR | 20220134562 | A | 05 October 2022 |
| | | | | BR | 112022015498 | A2 | 27 September 2022 |
| | | | | EP | 4104578 | A1 | 21 December 2022 |
| WO | 2019047940 | A1 | 14 March 2019 | CN | 108111280 | A | 01 June 2018 |
| | | | | EP | 3684124 | A1 | 22 July 2020 |
| | | | | US | 2023198699 | A1 | 22 June 2023 |
| WO | 2022067802 | A1 | 07 April 2022 | CN | 116097600 | A | 09 May 2023 |
| WO | 2022151502 | A1 | 21 July 2022 | CN | 116671218 | A | 29 August 2023 |
| | | | | EP | 4266789 | A1 | 25 October 2023 |
| | | | | US | 2023353307 | A1 | 02 November 2023 |
| WO | 2023011550 | A1 | 09 February 2023 | KR | 20240045266 | A | 05 April 2024 |
| | | | | EP | 4383628 | A1 | 12 June 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310368924